# FASCICULE DE BREVET EUROPEEN

(11) **EP 2 551 572 B1**
(45) Date de publication et mention de la délivrance du brevet: **20.02.2019**
(21) Numéro de dépôt: 12305916.4
(22) Date de dépôt: 26.07.2012
(51) Int. Cl.: F16K 31/56, F16K 31/00

(54) **Dispositif d'actionnement et de verrouillage d'un organe fonctionnel et module de vanne intégrant un tel dispositif**
Vorrichtung zum Betätigen und Sperren einer Funktionseinheit und Ventilmodul mit einem solchen Vorrichtung.
Apparatus for actuating and blocking a functional unit and valve module incorporating the same.

(30) Priorité: 29.07.2011 FR 1156938
(43) Date de publication de la demande: 30.01.2013
(73) Titulaire: Sogefi Air & Cooling (SAS), 78280 Guyancourt (FR)
(72) Inventeur: Adam, Christian, 68000 Colmar (FR); Becker, Nicolas, 68000 Colmar (FR)
(74) Mandataire: Nuss, Laurent

(56) Documents cités:
- DE-A1- 19 720 849
- US-A- 4 986 308
- US-A1- 2004 069 357

## Description

La présente invention concerne le domaine de l'actionnement d'organes fonctionnels, en particulier d'organes de régulation de flux gazeux ou liquides dans des circuits, et ce notamment dans un contexte d'équipement embarqué, par exemple de véhicule automobile.

L'invention a plus particulièrement pour objet un dispositif d'actionnement et de verrouillage, dans au moins deux positions stables, d'un organe fonctionnel, un module de vanne intégrant un tel dispositif et un circuit de circulation de fluide comprenant au moins un tel module.

De nombreux organes fonctionnels, en particulier les organes de régulation ou de commande de circulation de fluide, présentent des états ou des positions privilégié(e)s qu'ils occupent sélectivement de manière pratiquement continue et qui correspondent à des états stables ou fonctionnellement déterminés de ces organes.

Pour un organe de régulation de fluide à deux états, il peut, par exemple, s'agir des positions d'ouverture et de fermeture. Pour un organe de distribution, il peut s'agir d'une position parmi plusieurs mettant en relation de circulation fluidique une entrée avec une parmi plusieurs sorties.

Dans un contexte général de réduction des consommations énergiques, en particulier dans le cadre d'équipements embarqués, il peut être avantageux de réduire très fortement, voire réduire à zéro, la consommation énergétique (énergie électrique, pneumatique, hydraulique, du vide,...) des systèmes intégrant de tels organes fonctionnels et de ne solliciter positivement les actionneurs que durant les phases de commutation, c'est-à-dire les phases de déplacement dudit organe fonctionnel d'une position stable à une autre ou de modification ou transposition dudit organe fonctionnel d'un état stable à un autre.

Cette absence de consommation dans les positions stables de l'organe fonctionnel ne devrait pas non plus entraîner de surconsommation au niveau de l'actionneur durant les phases actives ou de manoeuvre dudit organe.

En outre, un verrouillage de l'organe fonctionnel dans chacune de ses positions stables devrait être obtenu sans nécessiter d'action positive, préférentiellement sans aucune participation active, de la part de l'actionneur.

On connaît déjà des dispositifs d'actionnement d'organes fonctionnels, en particulier aptes à déplacer un organe de contrôle de circulation de fluide du type vanne, dont les positions stables sont atteintes et/ou maintenues par mise en oeuvre d'un organe élastique.

Ainsi, le document US 2004/0069357 divulgue une vanne commutable par rotation d'une position initiale vers une position finale sous l'action d'un ressort précontraint, monté directement sur l'axe de rotation de la vanne et associé à un mécanisme de gâchette.

Ce dispositif, à structure complexe, nécessite une action de réarmement manuelle pour repositionner la vanne dans sa position initiale à l'encontre du ressort.

En outre, la vanne n'est pas positivement bloquée dans ses deux positions.

La présente invention vise à fournir une solution permettant d'atteindre les principaux, préférentiellement tous les buts exposés précédemment, en surmontant avantageusement les différentes limitations des solutions existantes.

A cet effet, l'invention a pour objet un dispositif d'actionnement et de verrouillage amovible dans au moins deux positions ou états stables ou fonctionnellement déterminé(e)s d'un organe fonctionnel, par exemple l'organe fonctionnel d'un moyen de régulation/contrôle de circulation de fluide tel qu'une vanne ou analogue, selon la revendication 1.

L'invention concerne également un module de vanne selon la revendication 29 et un circuit de circulation selon la revendication 30.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
Les figures 1A et 1B sont des vues éclatées en perspective selon deux directions différentes d'un module de vanne à deux positions stables intégrant un dispositif d'actionnement et de verrouillage selon un premier mode de réalisation de l'invention ;
La figure 2A est une vue en élévation frontale d'un module de vanne des figures 1A et 1B à l'état assemblé, le capot couvrant le mécanisme de transmission étant enlevé et l'organe fonctionnel étant en position stable d'obturation, le blocage étant réalisé et la première partie du mécanisme étant en position d'attente ;
La figure 2B est une vue en coupe selon A-A du module représenté figure 2A ;
La figure 2C est une vue en coupe selon B-B du module représenté figure 2B ;
La figure 2D est une vue en élévation latérale selon la direction G du module représenté figure 2A ;
Les figures 3A, 3B et 3C sont des vues identiques respectivement aux figures 2A, 2C et 2C, l'organe fonctionnel étant en cours de déplacement depuis la position stable d'obturation (figure 2) vers la position d'ouverture sous l'action de l'actionneur transmise par les deux parties en engagement mutuel d'entraînement du mécanisme de transmission ;
Les figures 4A, 4B et 4C sont des vues identiques respectivement aux figures 3A, 3B et 3C, l'organe fonctionnel étant arrivé en position stable d'ouverture, les deux parties du mécanisme de transmission étant encore mutuellement engagées et le blocage n'étant pas encore réalisé ;
Les figures 5A, 5B, 5C et 5D sont des vues identiques respectivement aux figures 2A, 2B, 2C et 2D, l'organe fonctionnel étant en position stable d'ouverture, les deux parties du mécanisme étant mutuellement désengagées, le blocage n'étant pas encore réalisé et la première partie du mécanisme étant en cours de déplacement vers sa position d'attente ;
Les figures 6A, 6B, 6C et 6D dont des vues identiques respectivement aux figures 5A, 5B, 5C et 5D, l'organe fonctionnel étant en position stable d'ouverture, le blocage étant en place et la première partie du mécanisme étant en position d'attente ;
Les figures 7A, 7B et 7C sont des vues identiques aux figures 4A, 4B et 4C, l'organe fonctionnel étant en cours de déplacement depuis la position stable d'ouverture vers la position de fermeture ou d'obturation sous l'action de l'actionneur transmise par les deux parties en engagement mutuel d'entraînement du mécanisme de transmission ;
Les figures 8A, 8B et 8C sont des vues identiques respectivement aux figures 7A, 7B et 7C, l'organe fonctionnel étant arrivé en position stable de fermeture, les deux parties du mécanisme de transmission étant encore mutuellement engagées et le blocage n'étant pas encore réalisé ;
Les figures 9A, 9B, 9C et 9D sont des vues respectivement identiques aux figures 5A, 5B, 5C et 5D, l'organe fonctionnel étant en position stable de fermeture, les deux parties du mécanisme étant désengagées, le blocage n'étant pas encore réalisé et la première partie du mécanisme étant en cours de déplacement vers sa position d'attente, la configuration des figures 9 précédant celle des figures 2 ;
Les figures 10A et 10B sont des vues éclatées en perspective selon deux directions différentes d'un module de vanne selon un second mode de réalisation de l'invention ;
La figure 11A est une vue en élévation frontale du module de vanne des figures 10A et 10B à l'étant assemblé, l'organe fonctionnel étant en position stable d'obturation, le blocage étant réalisé et la première partie du mécanisme étant en position d'attente ;
La figure 11B est une vue en coupe selon A-A du module représenté figure 11A ;
La figure 11C est une vue en coupe selon B-B du module représenté figure 11B ;
La figure 11D est une vue en élévation latérale selon la direction G du module représenté figure 11A ;
La figure 11E est en vue en perspective du module représenté figure 11A ;
Les figures 12A, 12B, 12C et 12D sont des vues respectivement identiques aux figures 11A, 11C, 11D et 11E, l'organe fonctionnel étant en cours de déplacement depuis la position stable d'obturation (figure 11) vers la position d'ouverture sous l'action de l'actionneur transmise par les deux parties en engagement mutuel d'entraînement du mécanisme de transmission ;
Les figures 13A, 13B, 13C et 13D sont des vues respectivement identiques aux figures 12A, 12B, 12C et 12D, l'organe fonctionnel étant arrivé en position stable d'ouverture, les deux parties du mécanisme de transmission étant encore mutuellement engagées et le blocage n'étant pas encore réalisé ;
Les figures 14A, 14B, 14C, 14D et 14E sont des vues respectivement identiques aux figures 11A, 11B, 11C, 11D et 11E, l'organe fonctionnel étant en position stable d'ouverture, le blocage étant en place et la première partie du mécanisme étant en position d'attente ;
Les figures 15A, 15B, 15C et 15D sont des vues respectivement identiques aux figures 13A, 13B, 13C et 13D, l'organe fonctionnel étant en cours de déplacement depuis la position stable d'ouverture vers la position de fermeture ou d'obturation sous l'action de l'actionneur transmise par les deux parties en engagement mutuel d'entraînement du mécanisme de transmission ;
Les figures 16A, 16B, 16C et 16D sont des vues respectivement identiques aux figures 15A, 15C et 15D, l'organe fonctionnel étant arrivé en position stable de fermeture, les deux parties du mécanisme de transmission étant encore mutuellement engagées et le blocage n'étant pas encore réalisé, la phase opératoire consécutive aboutissant à la configuration représentée figures 11 ;
Les figures 17A et 17B sont des vues éclatées en perspective selon deux directions différentes d'un module de vanne selon un troisième mode de réalisation de l'invention ;
La figure 18A et une vue en élévation frontale du module de vanne des figures 17A et 17B à l'étant assemblé, l'organe fonctionnel étant en position stable d'obturation, le blocage étant réalisé et la première partie du mécanisme étant en position d'attente ;
La figure 18B est une vue en coupe selon A-A du module représenté figure 18A ;
La figure 18C est une vue en coupe selon B-B du module représenté figure 18B ;
La figure 18D est une vue en élévation latérale selon la direction G du module représenté figure 18A ;
La figure 18E est en vue en perspective du module représenté figure 18A ;
Les figures 19A, 19B, 19C et 19D sont des vues respectivement identiques aux figures 18A, 18C, 18D et 18E, l'organe fonctionnel étant en cours de déplacement depuis la position stable d'obturation (figure 18) vers la position d'ouverture sous l'action de l'actionneur transmise par les deux parties en engagement mutuel d'entraînement du mécanisme de transmission ;
Les figures 20A, 20B, 20C et 20D sont des vues respectivement identiques aux figures 19A, 19B, 19C et 19D, l'organe fonctionnel étant arrivé en position stable d'ouverture, les deux parties du mécanisme de transmission étant encore mutuellement engagées et le blocage n'étant pas encore réalisé ;
Les figures 21A, 21B, 21C, 21D et 21E sont des vues respectivement identiques aux figures 18A, 18B, 18C, 18D et 18E, l'organe fonctionnel étant en position stable d'ouverture, le blocage étant en place et la première partie du mécanisme étant en position d'attente ;
Les figures 22A, 22B, 22C et 22D sont des vues respectivement identiques aux figures 20A, 20B, 20C et 20D, l'organe fonctionnel étant en cours de déplacement depuis la position stable d'ouverture (figure 21) vers la position de fermeture ou d'obturation sous l'action de l'actionneur transmise par les deux parties en engagement mutuel d'entraînement du mécanisme de transmission ;
Les figures 23A, 23B, 23C et 23D dont des vues respectivement identiques aux figures 22A, 22B, 22C et 22D, l'organe fonctionnel étant arrivé en position stable de fermeture, les deux parties du mécanisme de transmission étant encore mutuellement engagées et le blocage n'étant pas encore réalisé, la phase opératoire consécutive aboutissant à la configuration représentée figures 18, et,
Les figures 24A à 24D sont des représentations schématiques d'un dispositif d'actionnement selon une autre variante de réalisation de l'invention, illustrant quatre phases opératoires de ce dispositif associé à un organe fonctionnel à quatre positions stables et à mouvement rotatoire séquentiel.

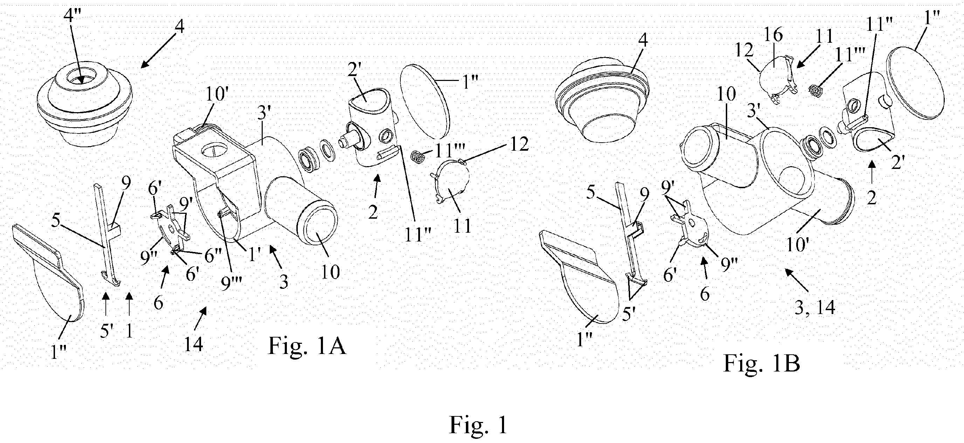

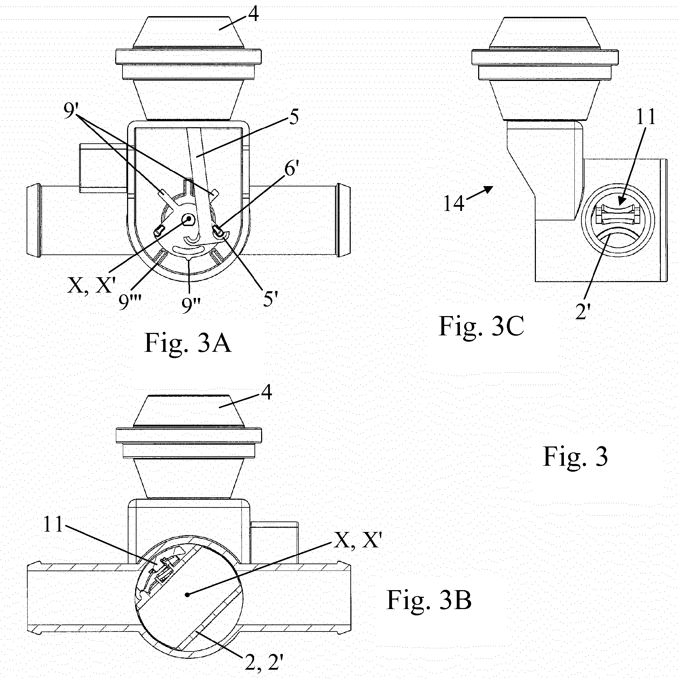

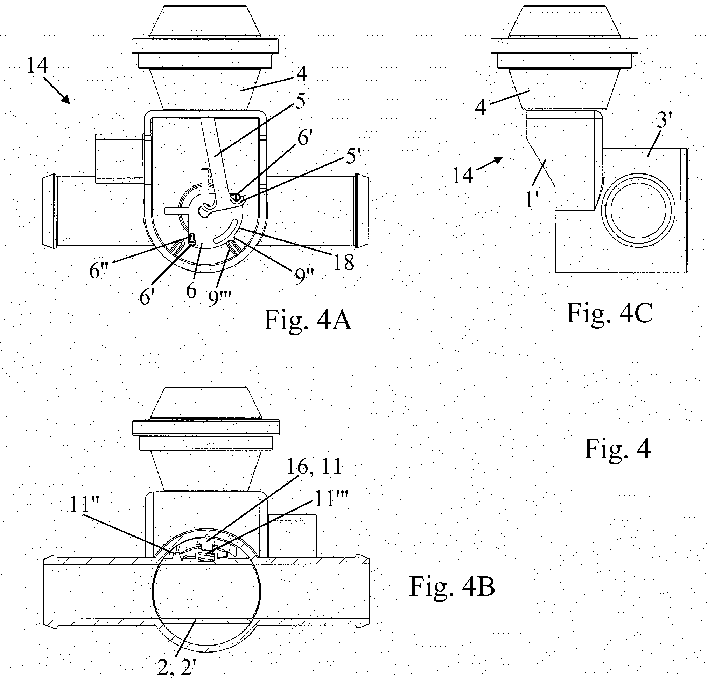

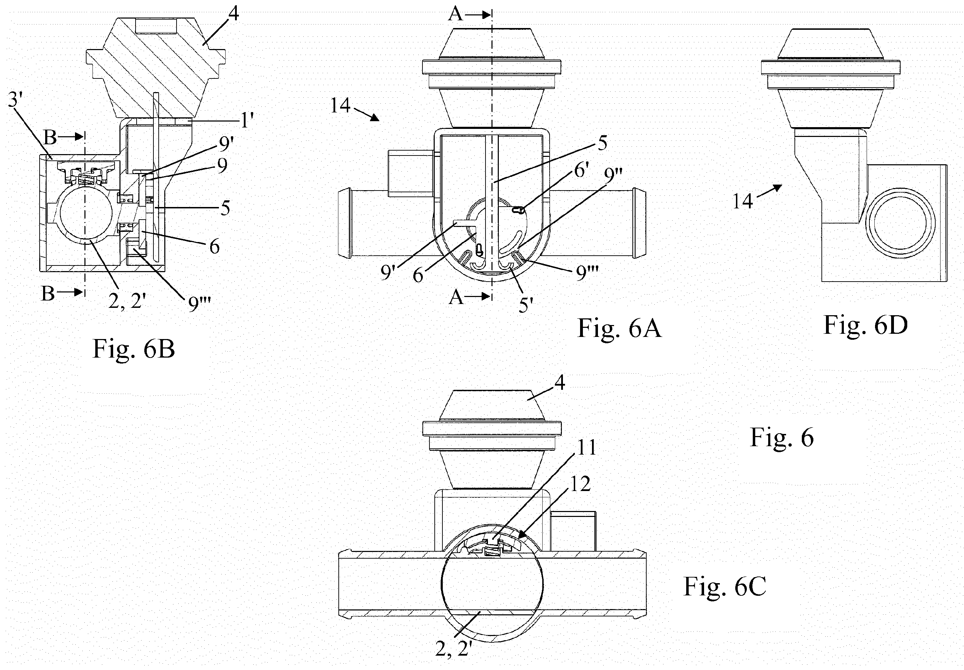

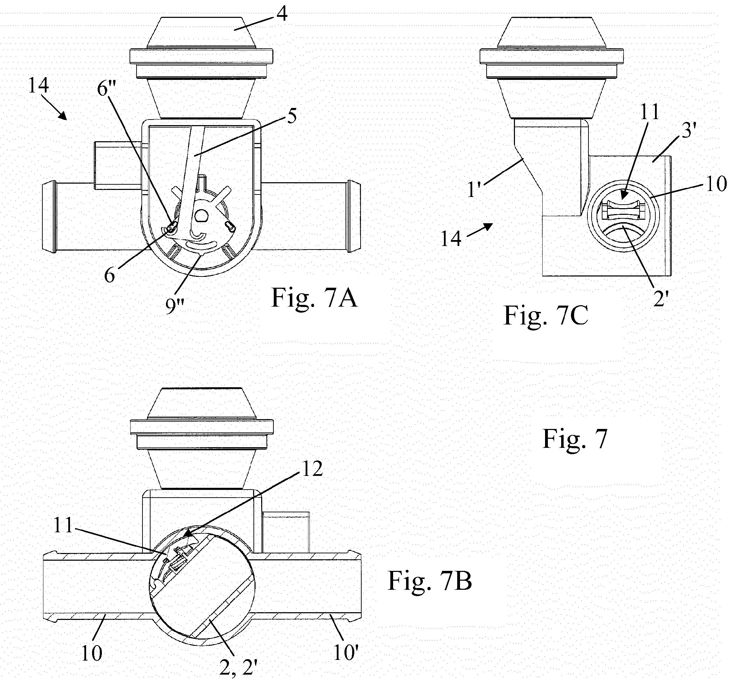

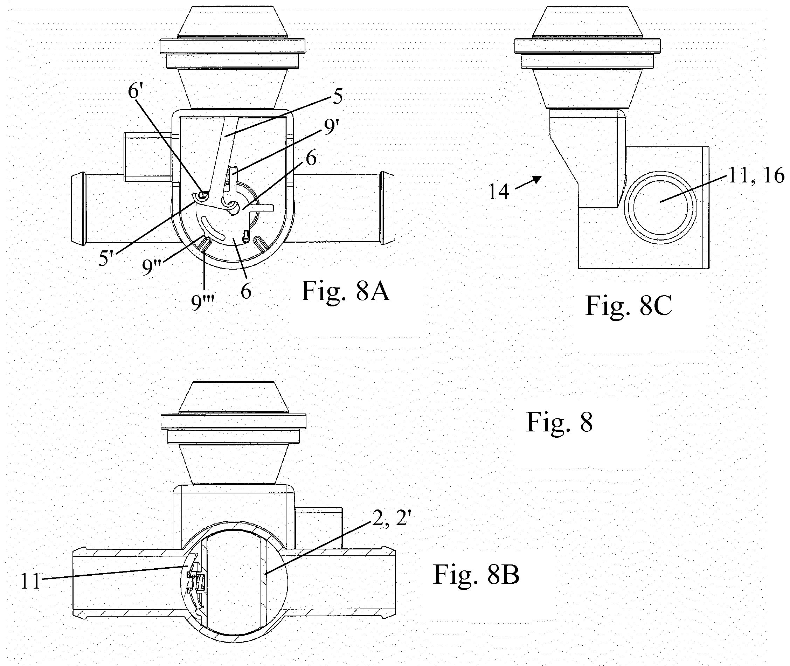

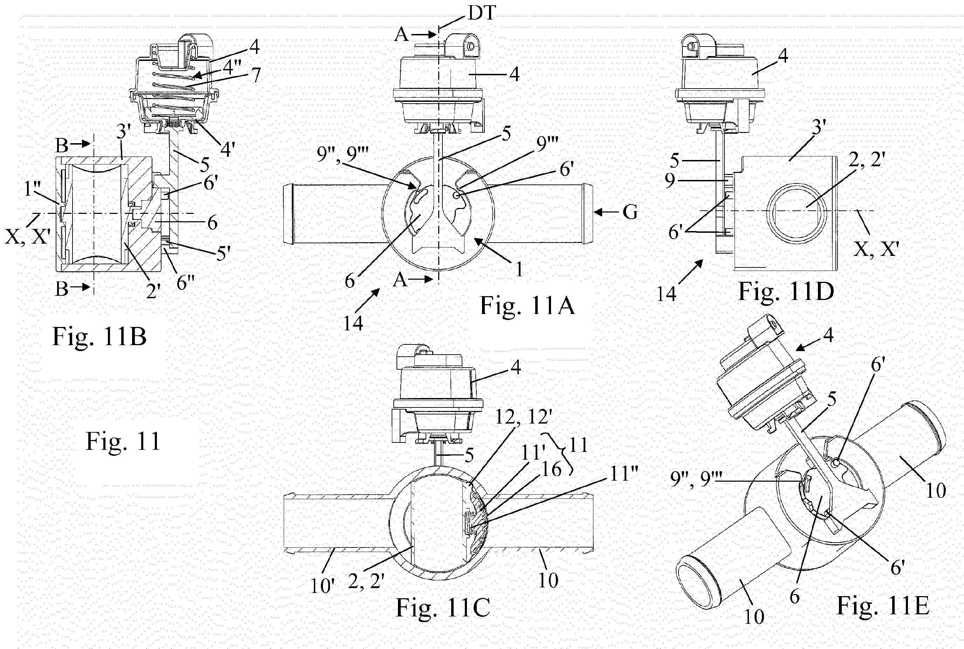

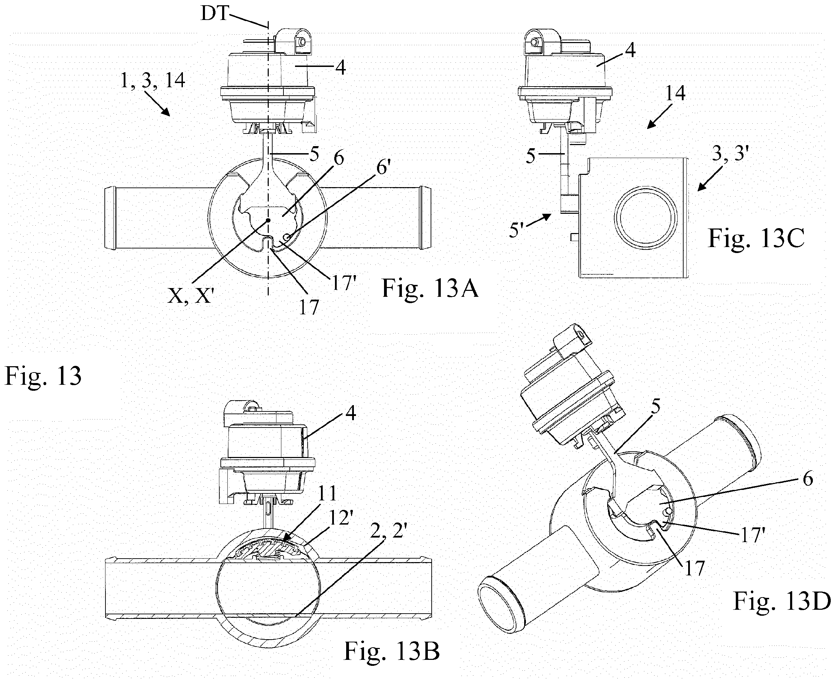

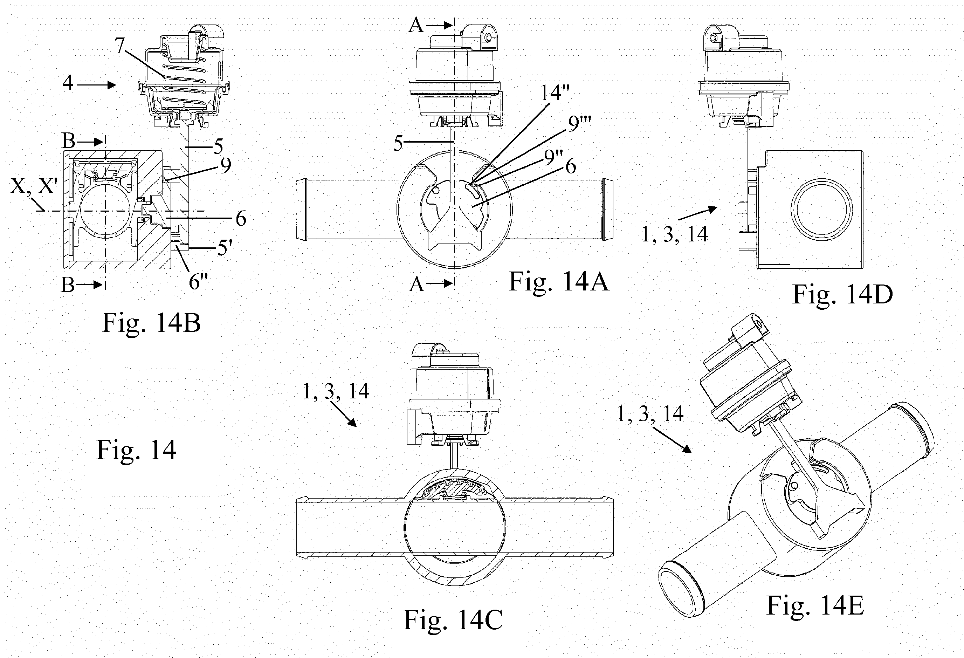

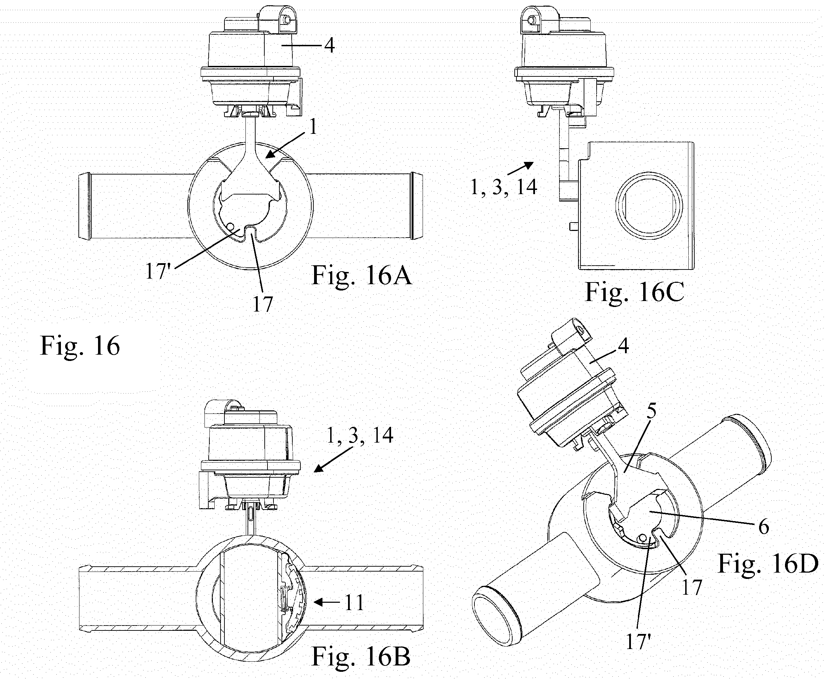

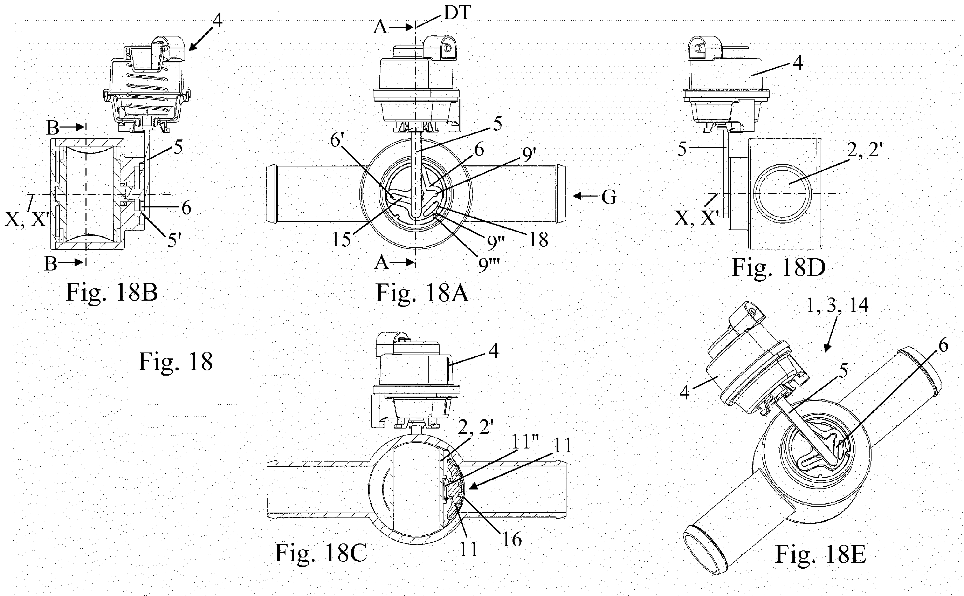

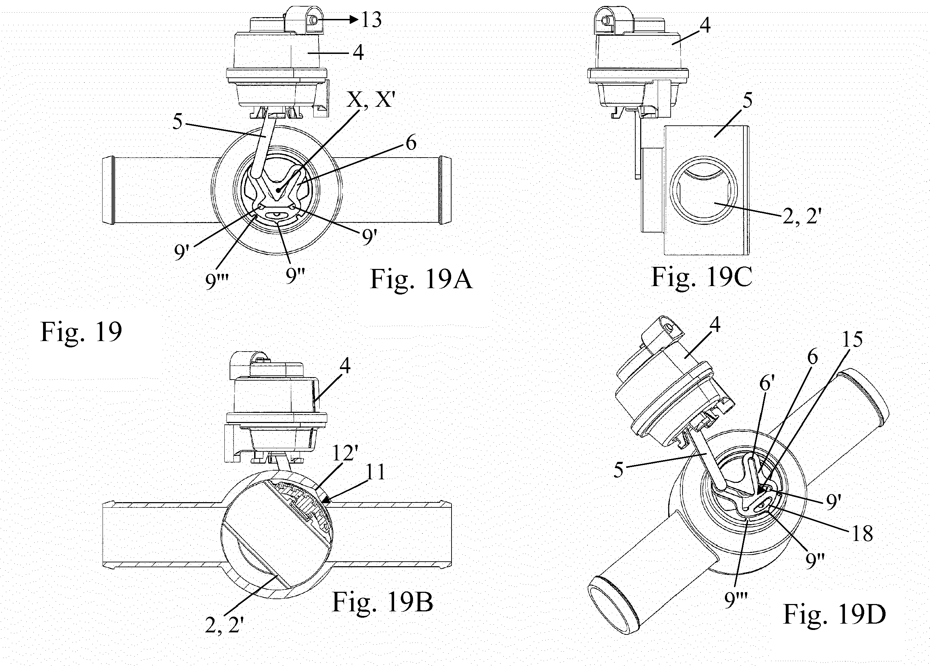

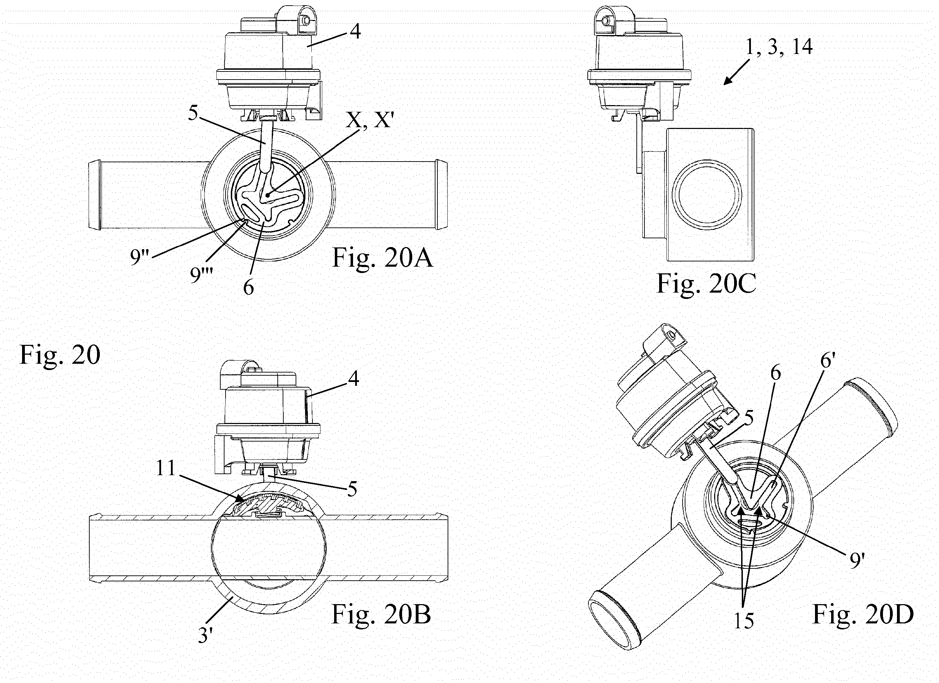

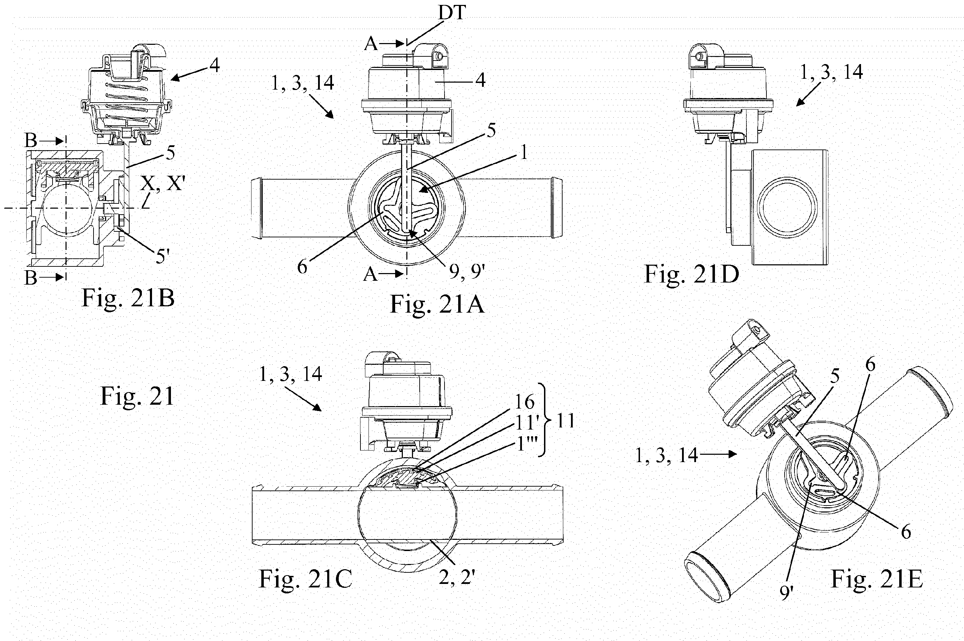

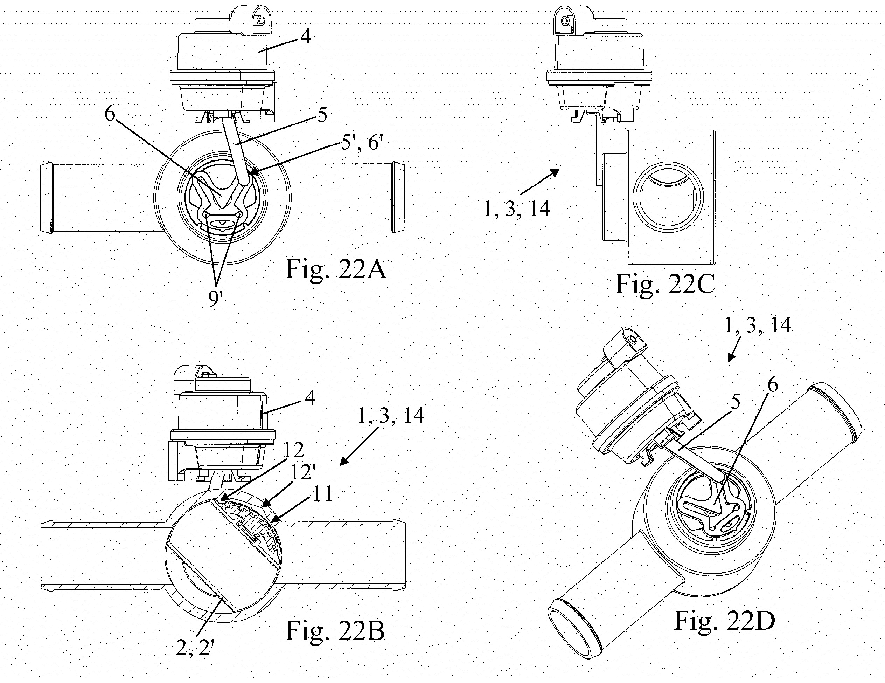

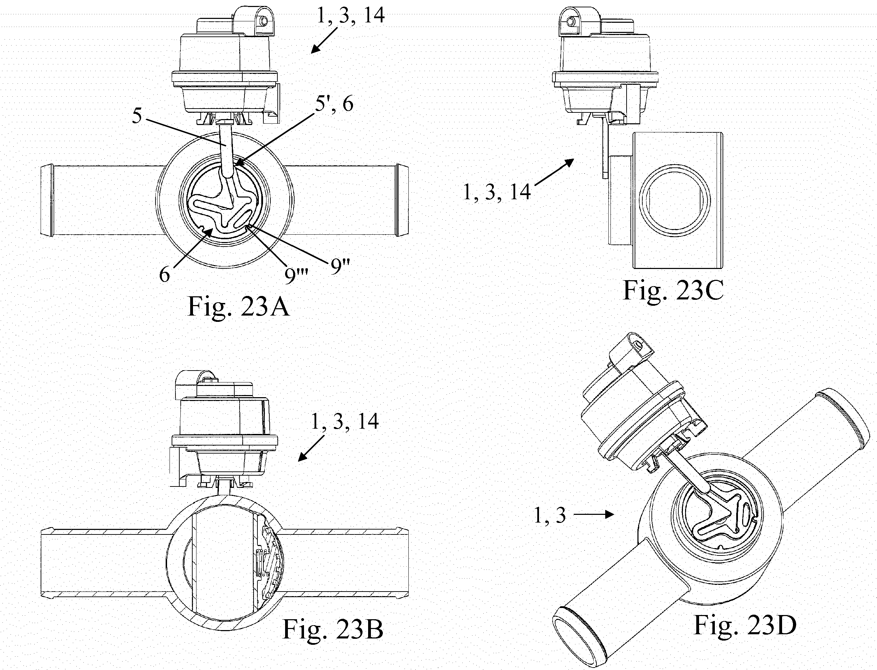

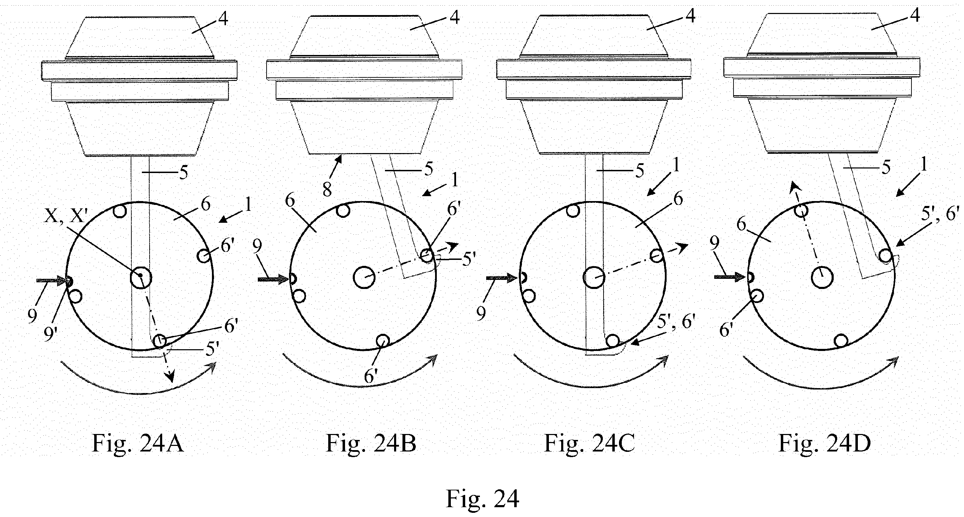

Bien que décrit et illustré plus particulièrement aux figures 1 à 23 en relation avec un module de vanne 14 à deux positions stables (tout ou rien), le dispositif d'actionnement 1 selon l'invention peut, bien entendu, être mis en oeuvre avec un organe fonctionnel 2 et/ou un actionneur 4 présentant plus de deux positions stables, comme l'illustrent les figures 24A à 24D.

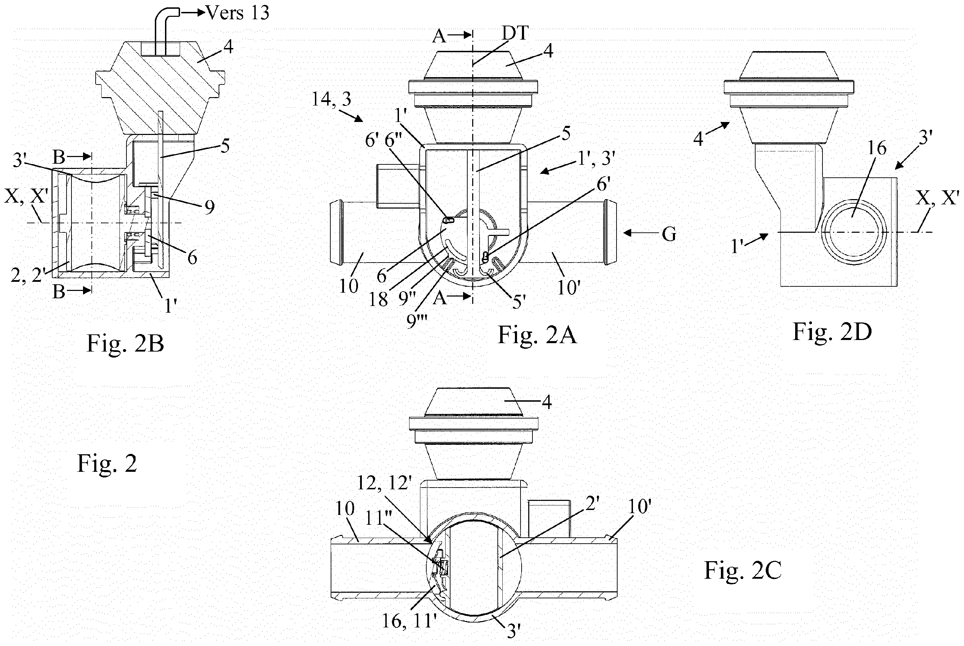

Les trois séries de figures 2 à 9, 11 à 16 et 18 à 23 illustrent chacune, respectivement pour l'un des trois modes de réalisation des figures 1, 10 et 17, les différentes étapes consécutives d'un cycle opératoire du dispositif 1 correspondant à une commutation dans les deux sens de l'organe fonctionnel 2 à deux positions stables, sous forme de boisseau d'une vanne 3 tout ou rien.

Les figures 1 à 23 illustrent, dans le cadre d'un moyen 3 de régulation/contrôle de circulation de fluide tel qu'une vanne ou analogue, un dispositif 1 d'actionnement et de verrouillage amovible dans au moins deux positions ou états stables ou fonctionnellement déterminé(e)s d'un organe fonctionnel 2.

La figure 24 illustre également un tel dispositif 1 sans que toutefois l'organe fonctionnel 2 ne soit représenté.

Ce dispositif 1 comprend essentiellement, d'une part, un actionneur 4 présentant au moins une configuration ou une position stable en l'absence de toute sollicitation active ou positive et, d'autre part, un mécanisme 5, 6 de transmission du mouvement comportant au moins deux parties fonctionnelles coopérantes dont une première 5 est reliée cinématiquement à l'actionneur 4, préférentiellement mécaniquement à la partie mobile 4' ou d'entraînement de l'actionneur, et dont une autre ou la seconde partie 6 est reliée cinématiquement à l'organe fonctionnel 2 mobile dans un boîtier ou corps creux 3'.

Conformément à l'invention, chacun(e) des positions ou états stables de l'organe fonctionnel 2, préférentiellement au moins au nombre de deux, correspond à la, respectivement à une, position ou configuration stable passive de l'actionneur 4 et dans au moins un(e), préférentiellement chacun(e) de ces positions ou états stables de l'organe fonctionnel 2, la première partie 5 du mécanisme de transmission du mouvement engage, directement ou indirectement, la seconde ou autre partie 6 de manière à réaliser ou à contribuer à un blocage en position de cette dernière.

Par position ou configuration stable passive, on entend dans la présente un état de l'actionneur 4 dans lequel ce dernier a une consommation d'énergie nulle (énergie externe alimentant l'actionneur 4 pour son fonctionnement) et dans lequel il demeure figé, en l'absence de sollicitation externe ou d'alimentation.

Ainsi, grâce aux dispositions précitées de l'invention, l'organe fonctionnel 2 est verrouillé (engagement mécanique mutuel des deux parties 5 et 6 résultant en un blocage en position physique de la partie 6 et de l'organe 2) dans ses positions stables, généralement des positions maintenues pendant des périodes de temps importantes, sans entraîner de consommation ou niveau de l'actionneur 4.

En accord avec une variante de réalisation préférée de l'invention, ressortant des différentes figures annexées, la seconde ou autre partie 6 du mécanisme de transmission de mouvement est montée en rotation, et les positions ou états stables de l'organe fonctionnel 2 correspondent à des positions angulaires spécifiques autour de l'axe de rotation X de ladite seconde ou autre partie 6, associées chacune à un état ou à une position stable ou fonctionnellement déterminé(e) de l'organe fonctionnel 2. Préférentiellement, la seconde partie 6 est reliée rigidement à l'organe fonctionnel 2, son axe de rotation X étant préférentiellement confondu avec l'axe de rotation X' de l'organe fonctionnel 2, ou en ce que la seconde partie 6 est reliée cinématiquement à l'organe fonctionnel 2.

Bien entendu, la seconde partie 6 et l'organe 2 sont montés dans les boîtiers 1' et 3' respectifs par l'intermédiaire d'arrangements de paliers rotatoires étanches connus en soi, comme l'illustrent les figures annexées.

Comme l'illustrent à titre d'exemple les figures 1, 10 et 17 notamment, les composantes 5 et 6 du mécanisme de transmission sont au moins partiellement, préférentiellement totalement et avec fourniture d'un palier support en ce qui concerne la seconde partie 6, montées dans un boîtier 1' attenant au boîtier 3' logeant l'organe fonctionnel 2 (ces deux boîtiers étant éventuellement formés d'une seule pièce, par exemple en matériau thermoplastique), les boîtiers 1' et 3' étant, le cas échéant, fermés par des couvercles 1".

En accord avec une caractéristique de l'invention, la première partie 5 du mécanisme de transmission du mouvement coopère avec la seconde ou autre partie 6 dudit mécanisme par une liaison de transmission unidirectionnelle de mouvement, préférentiellement avec modification de la direction, du sens et/ou du type de mouvement constituant préférentiellement une liaison cinématique intermittente, s'établissant le temps de la transmission du mouvement nécessaire pour amener l'organe fonctionnel 2 d'une position stable à l'autre ou une autre position stable.

Du fait de la nature unidirectionnelle et intermittente de la liaison entre l'organe fonctionnel 2 et l'actionneur 4, ces deux éléments ne subissent aucune sollicitation ni contrainte l'un de l'autre, en particulier l'actionneur 4 n'est soumis à aucune contrainte de la part de l'organe fonctionnel 2, lorsque la liaison est rompue.

En outre, la prévision d'une possibilité de modification de la direction, du sens et/ou du type de mouvement autorise une grande flexibilité de mise en oeuvre du dispositif d'actionnement, en relation avec des actionneurs 4 et des organes fonctionnels 2 de différents types, ainsi qu'une grande adaptabilité à des conditions d'installation variées, notamment en terme d'encombrement.

Plus particulièrement, la liaison d'entraînement par intermittence, réalisant une transmission de mouvement entre la première partie 5 et la seconde partie 6 lors des phases de déplacement de l'organe fonctionnel 2, peut être avantageusement formée par un engagement mécanique débrayable entre ces deux parties 5 et 6 autorisant un mouvement relatif entre eux sans transmission effective de mouvement à la seconde partie 6 lors de phases de repositionnement relatif de la première partie 5 vers une position d'attente, aboutissant à une reconfiguration du mécanisme de transmission en vue de la phase de déplacement suivante de l'organe fonctionnel 2, et correspondant à une position ou configuration stable de l'actionneur 4.

On aboutit ainsi à une plage morte de non transmission de mouvement entre l'actionneur 4 et l'organe fonctionnel 2 par déconnexion physique résultant en deux ensembles cinématiquement indépendants.

En accord avec une autre caractéristique avantageuse de l'invention et en vue d'éviter tout déplacement involontaire de la seconde partie 6 (et donc de l'organe fonctionnel 2), la seconde partie 6 est bloquée en position durant les phases de reconfiguration, par exemple par l'intermédiaire de moyens 9", 9'" ; 12, 12' mutuellement coopérants formant des puits de potentiel, des points durs ou analogues.

Cette disposition de l'invention permet également à la seconde partie 6 de résister à toute influence éventuelle de la part de la première partie 5 durant les phases de repositionnement automatique en position d'attente de cette dernière partie ou de reconfiguration du mécanisme de transmission.

Conformément à une variante de réalisation illustrée sur les figures 1 à 23 des dessins annexés, en relation avec une application préférée de l'invention, l'organe fonctionnel 2 comporte deux positions ou états stables et le mouvement de la seconde partie 6 du mécanisme, sous l'action positive d'entraînement de la première partie 5, est un mouvement discontinu alternatif commutant l'organe fonctionnel 2 successivement entre ses états stables. Ces deux positions stables sont atteintes par des actions similaires (et répétitives) du mécanisme de transmission 5, 6, générant un mouvement alternatif commutant l'organe fonctionnel 2 successivement entre ses états stables.

Toutefois, comme l'illustrent les figures 24A à 24D, le mouvement de la seconde partie 6 peut également être un mouvement séquentiel, le cas échéant, cyclique, commutant l'organe fonctionnel entre plus de deux états stables. Dans ce cas également, ces différentes positions sont atteintes successivement par des actions similaires (et répétitives) du mécanisme de transmission.

Selon une caractéristique avantageuse de l'invention, le blocage en position de la seconde ou autre partie 6 dans chacun(e) des positions ou états stables de l'organe fonctionnel 2 est un blocage mécanique et résulte de la nature irréversible de la transmission de mouvement entre les deux parties 5 et 6 constitutives du mécanisme de transmission, liée à un engagement unilatéral débrayable de ces deux parties et/ou de l'engagement mécanique mutuel de deux parties complémentaires 9 et 9' d'un moyen spécifique de blocage, associées chacune à l'une desdites au moins deux parties 5 et 6 du mécanisme.

En accord avec une autre caractéristique de l'invention, permettant notamment d'éviter toute consommation énergétique durant les phases de positionnement stable de l'organe fonctionnel 2 (phases de longue durée) et les phases opératoires ne nécessitant pas une fourniture d'efforts importants, il peut être prévu que la ou chaque configuration ou position stable de l'actionneur 4, en l'absence de toute sollicitation active ou positive, soit obtenue ou atteinte et, le cas échéant, maintenue, par l'intermédiaire d'un moyen d'accumulation d'énergie potentielle 7, préférentiellement d'énergie élastique, associé ou intégré audit actionneur 4.

Ce moyen d'accumulation 7 est avantageusement chargé ou mis sous contrainte durant les phases de fonctionnement actif, donc d'alimentation, de l'actionneur 4 (lui-même à fonctionnement commandé et alimenté en énergie externe).

Conformément à un mode de réalisation préférée de l'invention, l'actionneur 4 est un actionneur à mouvement essentiellement translatif du type choisi dans le groupe formé par les actionneurs électriques, hydrauliques, pneumatiques, électromagnétiques, à élément dilatant ou à alliage à mémoire de forme.

Plus précisément, en accord avec une variante de réalisation pratique avantageuse, l'actionneur 4 se présente sous la forme d'un vérin pneumatique ou hydraulique dont la tige de commande ou d'entraînement correspond ou est assujettie à la première partie 5 du mécanisme de transmission de mouvement, cette tige 5 constituant l'organe mobile 4' de l'actionneur ou étant relié à celui-ci, le cas échéant de manière articulée.

Comme le montrent les figures des dessins annexés, et en particulier les figures 2 à 9, 11 à 16 et 18 à 23, et en relation avec les modes de réalisation qui y sont représentés, le mécanisme de transmission 5, 6 présente une structure générale et un fonctionnement symétriques par rapport à la direction générale de translation DT de la première partie 5, passant par l'axe de rotation de la seconde partie 6.

Les deux positions ou états stables de l'organe fonctionnel sont atteintes de manière similaire par le biais de l'action du mécanisme de transmission 5, 6, la première partie 5 effectuant un mouvement cyclique de va-et-vient (alternativement avec un pivotement limité de part et d'autre de l'axe DT), et la seconde partie 6 effectuant de manière synchronisée et imposée un mouvement alternatif de pivotement entre deux positions extrêmes de rotation.

Chaque commutation de l'organe 2, et donc de la seconde partie 6 qui lui est liée, comprend une phase de déplacement effective sous l'action d'entraînement de la première partie 5 déplacée par l'actionneur 4 et une phase de verrouillage en position finale (blocage physique) par engagement mécanique mutuel des deux parties 5 et 6 (blocage dans les deux sens de rotation de 2 et de 6).

En vue de conférer à la première partie 5 un degré de liberté de mouvement limitée supplémentaire et de permettre une reconfiguration non interférente du mécanisme de transmission 5, 6, il peut être prévu que la première partie 5 du mécanisme de transmission du mouvement soit reliée directement ou indirectement, par une liaison articulée 8, à une partie 4' mobile en translation de l'actionneur 4, ladite liaison articulée 8 autorisant un pivotement limité autour d'au moins un axe perpendiculaire à la direction de translation DT de la partie mobile 4' de l'actionneur 4.

Cette liaison articulée 8 permet, en outre, de conférer au mécanisme de transmission un certain degré de souplesse, le pivotement limité précité s'effectuant à l'encontre de l'apesanteur et/ou d'une sollicitation élastique.

En variante, la liaison 8 entre la première partie 5 et l'actionneur 4 peut également consister en une liaison non articulée, l'actionneur 4 lui-même (à mouvement purement translatif) étant alors monté avec faculté d'articulation au moins limitée, par exemple sur un pivot, un palier souple ou déformable ou analogue (variante non représentée).

Avantageusement et comme le montre à titre d'exemple les figures 1, 10 et 17 notamment, l'actionneur 4 est un actionneur pneumatique dont la partie mobile consiste en une membrane élastiquement déformable ou une partie de paroi mobile 4' à laquelle est reliée la première partie 5 et qui délimite partiellement une chambre de commande 4" pouvant être reliée sélectivement, d'une part, à une réserve de vide ou à une source de pression pneumatique et, d'autre part, à l'atmosphère, ce sous le contrôle d'une électrovanne ou d'un organe sélecteur analogue 13, alimenté(e) uniquement durant les phases de commutation de l'organe.

Préférentiellement, la première partie 5 est soumise à un mouvement essentiellement en translation et la seconde partie 6 est soumise à un mouvement de rotation, la coopération entre ces deux parties 5, 6 du mécanisme de transmission du mouvement réalisant une transformation de type de mouvement avec un entraînement unidirectionnel.

Comme l'illustrent les phases opératoires représentées sur les figures 2 à 9, 11 à 16 et 18 à 23, et en accord avec les trois modes de réalisation de l'invention précités, les moyens mutuellement coopérants 5', 6' de la première et de la seconde partie 5 et 6 du mécanisme de transmission présentent des arrangements et/ou des structures symétriques, pour la première partie 5 par rapport à l'axe ou à la direction de translation DT et pour la seconde partie 6 par rapport à l'axe de rotation X, ces moyens étant alternativement en engagement mutuel d'entraînement, préférentiellement par accrochage, lors des phases de déplacement de l'organe fonctionnel 2 entre deux positions ou états stables, en particulier alternativement d'un côté et de l'autre de l'axe de translation DT de la première partie 5 et/ou alternativement selon deux positions angulaires différentes autour de l'axe de rotation X de la seconde partie 6, dans le cas d'un déplacement alternatif avec inversion du sens entre deux positions stables, ces engagements consécutifs alternés étant préparés lors de phases intercalées de reconfiguration avec désengagement du mécanisme de transmission correspondant à des positionnements stables ou d'attente de la première partie 5 et de l'actionneur 4.

Conformément aux deux premiers modes de réalisation illustrés aux figures 1 à 16, la seconde partie 6 du mécanisme de transmission du mouvement consiste en une came rotatoire, solidaire en rotation de l'organe fonctionnel 2 et comportant au moins deux sites d'accrochage 6' décalés angulairement autour de l'axe de rotation X de la came 6. De plus, la première partie 5 du mécanisme précité consiste en une tige d'entraînement pourvue d'au moins un moyen d'accrochage 5', préférentiellement de deux moyens d'accrochage arrangés de manière symétrique de part et d'autre de la tige, ledit moyen d'accrochage 5', ou chaque moyen d'accrochage 5' à tour de rôle, venant en engagement temporaire avec l'un des sites d'accrochage 6' de la came 6, en vue de sa rotation sur une fraction de tour, lors d'un déplacement en translation de la tige d'entraînement 5 provoquée du fait d'une sollicitation positive ou active de l'actionneur 4, ce jusqu'à aboutir à une position stable indexée de l'organe fonctionnel 2, ledit moyen d'accrochage 5' étant alors désengagé dudit site d'accrochage 6' et ladite tige d'entraînement 5 déplacée et maintenue dans une position d'attente correspondant à la ou à une position stable passive de l'actionneur 4 et correspondant à une configuration du mécanisme de transmission 5, 6 en prévision d'une transmission de mouvement amenant l'organe fonctionnel 2 vers l'autre ou une autre position stable, lors d'une activation consécutive de l'actionneur 4.

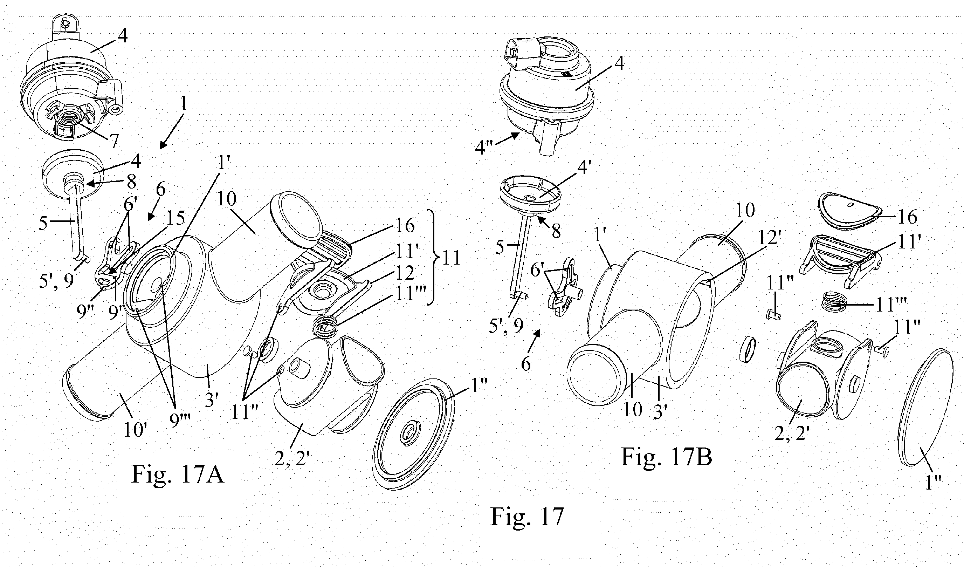

Conformément au troisième mode de réalisation illustré aux figures 17 à 23, la seconde partie 6 du mécanisme de transmission du mouvement consiste en une came rotatoire, solidaire en rotation de l'organe fonctionnel 2 et comportant une rainure 15 formant chemin de came. En outre, la première partie 5 dudit mécanisme consiste en une tige d'entraînement pourvue d'un moyen d'accrochage 5' engagé avec faculté de circulation dans la rainure 15, cette dernière comprenant des sites d'accrochage 6' pour le moyen 5' en vue d'une rotation de la came 6 sur une fraction de tour, lors d'un déplacement en translation de la tige d'entraînement 5 provoqué du fait d'une sollicitation positive ou active de l'actionneur 4, ce jusqu'à aboutir à une position stable indexée de l'organe fonctionnel 2, ledit moyen d'accrochage 5' étant alors désengagé dudit site d'accrochage 6' et ladite tige d'entraînement 5 déplacée et maintenue dans une position d'attente correspondant à la ou à une position stable passive de l'actionneur 4 et correspondant à une configuration du mécanisme de transmission 5, 6 en prévision d'une transmission de mouvement amenant l'organe fonctionnel 2 vers l'autre ou une autre position stable, lors d'une activation consécutive de l'actionneur 4.

Selon une caractéristique commune aux trois modes de réalisation illustrés aux figures 1 à 23 annexées et à la variante de réalisation de la figure 24, le désengagement du moyen d'accrochage 5' considéré, par exemple une extrémité en forme de crochet, un doigt ou un ergot, d'avec le site d'accrochage 6' concerné, par exemple sous la forme d'un doigt, d'un ergot ou d'une extrémité de rainure, et le déplacement de la tige d'entraînement 5 le comportant dans la position d'attente sont réalisés automatiquement sous l'action d'un moyen 7 d'accumulation d'énergie potentielle de l'actionneur 4, chargé lors du déplacement en rotation précédent de la came 6 dans une position indexée. De plus, en position d'attente, le moyen d'accrochage 5', ou l'autre moyen d'accrochage 5', est positionné pour venir automatiquement en engagement d'entraînement avec l'autre site d'accrochage 6', ou le site d'accrochage 6' suivant, positionné de façon adéquate suite à la rotation précédente de la came 6, lors du déplacement suivant en translation de la tige d'entraînement 5 du fait d'une sollicitation positive ou active de l'actionneur 4.

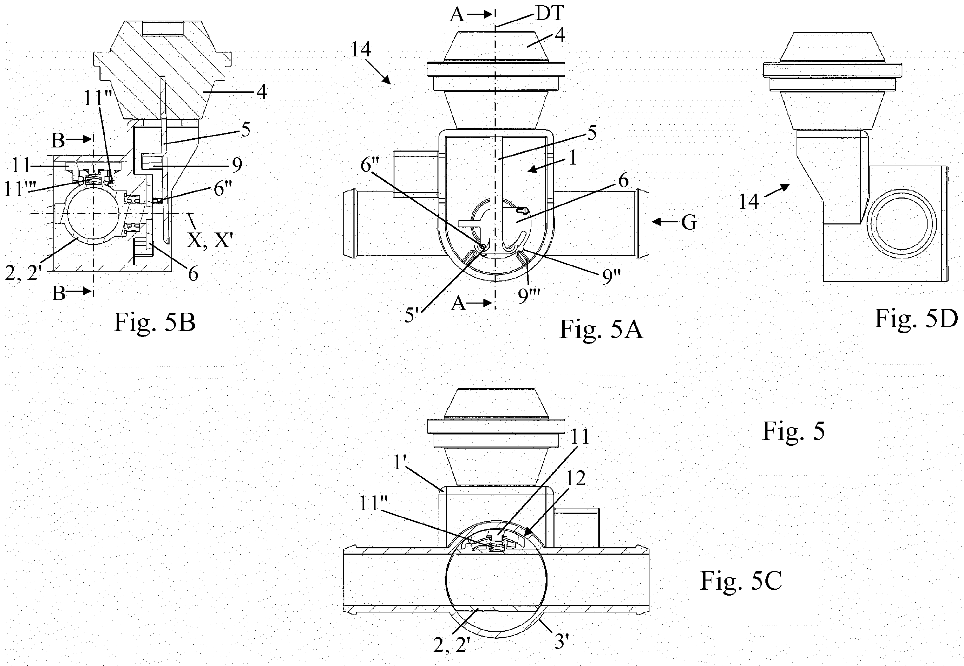

En accord avec une réalisation pratique de l'invention, autorisant une reconfiguration fiable et automatique du mécanisme de transmission, et comme le montrent notamment les figures 5, 9, 12, 15, il peut être prévu, lors du déplacement de la tige d'entraînement 5 vers sa position stable, que le moyen d'accrochage unique 5' ou l'autre moyen d'accrochage 5' passe à côté ou par-dessus le site d'accrochage 6' de la came 6 rotatoire, avec lequel il est destiné à venir en prise lors du déplacement suivant de la tige d'entraînement 5 du fait d'une sollicitation positive ou active de l'actionneur 4, par pivotement forcé de ladite tige d'entraînement 5 au niveau de la liaison articulée 8, par exemple provoqué par glissement de ladite tige 5 en appui sur lesdits sites d'accrochage 6', au niveau d'une surface en 6" pente formée sur le moyen d'accrochage 5' ou sur les sites d'accrochage 6'.

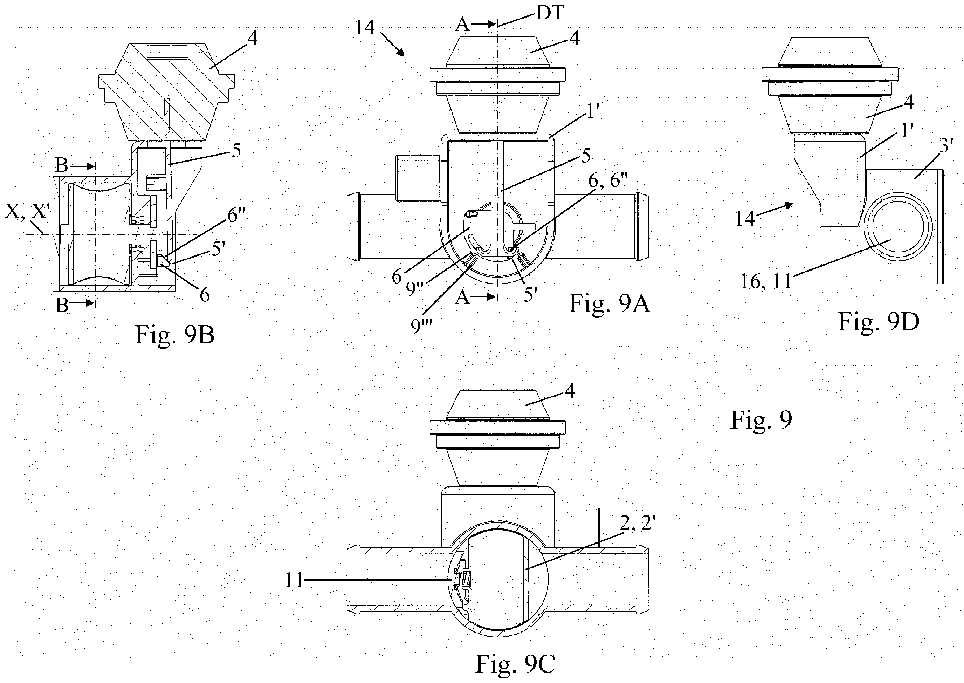

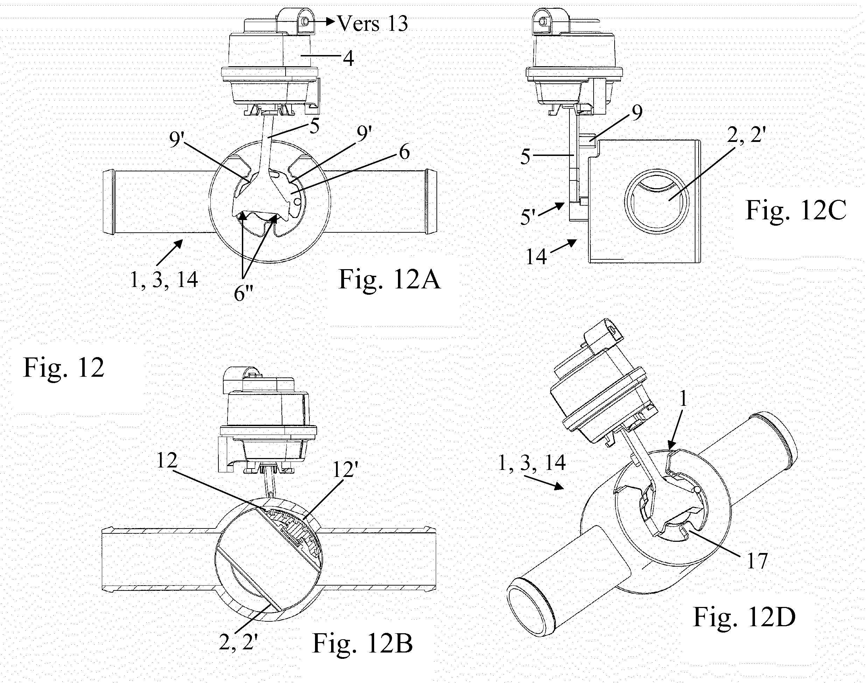

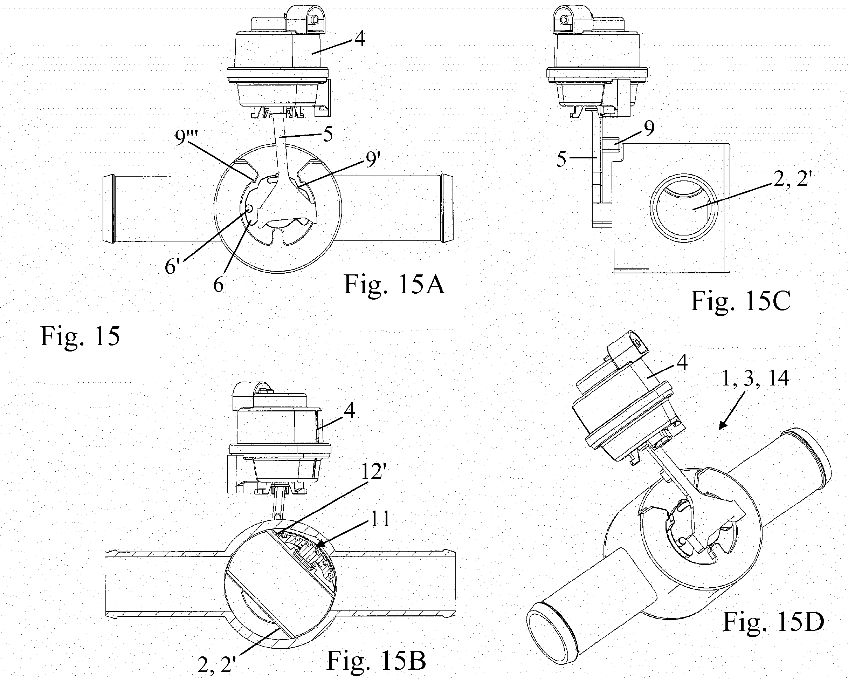

On notera que, dans le cadre du premier mode de réalisation (figures 5 et 9), la première partie 5 pivote de manière limitée autour d'un axe perpendiculaire à l'axe de rotation X de la seconde partie 6, alors que, dans le cadre du seconde mode de réalisation (figures 12 et 15), la première partie 5 pivote de manière limitée autour d'un axe parallèle à l'axe de rotation X de la seconde partie 6, ces deux axes de pivotement étant perpendiculaires à la direction de translation DT de la partie mobile 4' de l'actionneur 4 et de la première partie 5 (cette direction DT étant elle-même perpendiculaire et sécante par rapport à l'axe de rotation X et le cas échéant X').

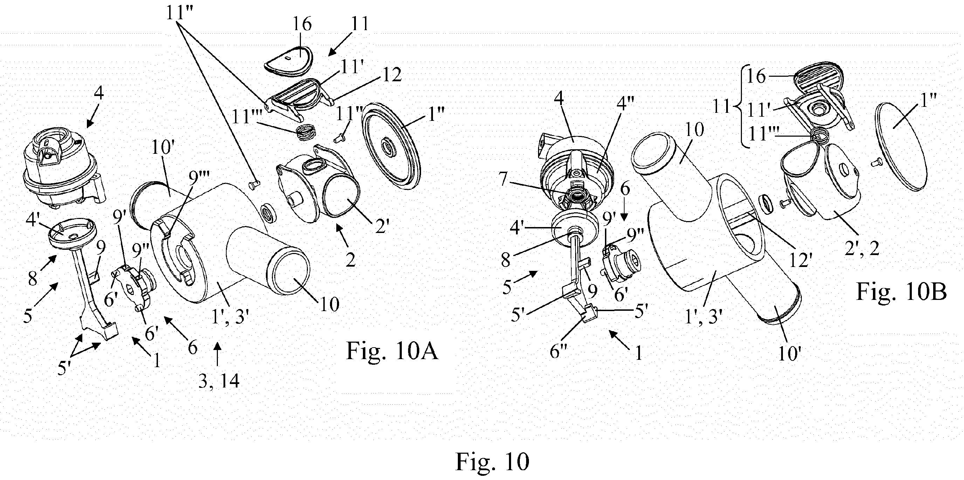

En accord avec une réalisation pratique avantageuse du blocage de la seconde partie 6 dans les positions stables de l'organe fonctionnel 2 et comme le montrent notamment les figures 1 et 10 des dessins annexés, la tige d'entraînement 5 comporte une première partie 9 d'un moyen de blocage en position de la came rotatoire 6 et cette dernière est pourvue de plusieurs formations 9', associées chacune à un site d'accrochage 6' et constituant chacune pour une position stable déterminée de l'organe fonctionnel 2, et donc pour une position déterminée en rotation de la came rotatoire 6, une seconde partie fonctionnellement coopérante dudit moyen de blocage, les deux parties mutuellement complémentaires 9, 9', par exemple mâle et femelle ou en creux et saillant, du moyen de blocage étant fonctionnellement coopérantes en vue du verrouillage en position de rotation de la came 6, en position d'attente de la tige d'entraînement 5.

Comme le montrent à titre d'exemple les figures 1 à 9, cette première partie 9 du moyen de blocage consiste en un logement formé sur ou dans la tige d'entraînement 5 et les formations 9' de la came rotatoire 6 constituant respectivement la seconde partie dudit moyen de blocage consistent chacune en une patte destinée à venir s'emboîter avec ajustement dans le logement précité, en fin du mouvement de déplacement de la tige d'entraînement 5 avant son arrivée dans une position d'attente.

En variante et comme le montrent à titre d'exemple les figures 10 à 16, la première partie 9 du moyen de blocage 9, 9' consiste en une patte ou un doigt formé(e) sur la tige d'entraînement 5 et les formations 9' de la came rotatoire 6 consistent en des dépressions ou des indentations ménagées sur le pourtour de cette dernière, ladite patte ou ledit doigt 9 venant se loger dans une desdites dépressions ou indentations 9' en fin du mouvement de déplacement de la tige d'entraînement 5 avant son arrivée dans une position d'attente.

Enfin, en relation avec le troisième mode de réalisation et comme représenté à titre d'exemple sur les figures 17 à 23, il peut être prévu que la première partie 9 du moyen de blocage corresponde au moyen d'accrochage 5' sous forme de doigt ou d'ergot de la tige d'entraînement 5 et que les formations 9' de la came rotatoire 6 pourvue d'une rainure 15 consistent en des portions déformées latéralement de ladite rainure formant sites de réception avec imbrication du doigt ou de l'ergot 5', ce dernier venant se loger dans une de ces portions 9' en fin du mouvement de déplacement de la tige d'entraînement 5 avant son arrivée dans une position d'attente.

En plus des moyens 9 et 9', le mode de réalisation des figures 17 à 23 peut, le cas échéant, également présenter un moyen de blocage additionnel par emboîtement, tel que par exemple celui représenté par les éléments 9 et 9' sur les figures 1A et 1B en relation avec le premier mode de réalisation.

La figure 24 illustre schématiquement une autre variante encore du moyen de blocage 9, 9' de la seconde partie 6 dans les différentes positions stables.

En vue d'éviter un désengagement non souhaité du moyen de blocage, la coopération mutuelle des première et seconde parties 9 et 9' du moyen de blocage en position d'attente de la tige d'entraînement 5, et donc le blocage en rotation de la came 6 et de l'organe 2, peut être maintenue sous l'action du moyen 7 d'accumulation d'énergie potentielle, par exemple par sollicitation élastique de la première partie 5 en direction d'engagement de la première partie 9 sur ou dans une des secondes parties 9' (selon la direction DT).

Préférentiellement et comme le montre l'ensemble des figures 1 à 23, l'organe fonctionnel 2 consiste en un organe fonctionnel d'une vanne 3 à deux positions, par exemple d'une vanne tout ou rien, éventuellement du type à faible fuite ou à fuite nulle en position fermée.

Dans le cadre de cette application préférentielle de la mise en oeuvre du dispositif 1 selon l'invention, l'organe fonctionnel 2 peut consister en une portion de conduit 2' montée pivotante dans le corps de vanne 3', avantageusement rectiligne profilé et dont la section correspond préférentiellement aux sections des ouvertures ou segments de conduit d'entrée 10 et de sortie 10' du corps de vanne 3' traversé par le fluide à réguler, ladite portion de conduit 2' étant pourvue latéralement d'un clapet d'obturation 11. Dans ce contexte, ladite portion de conduit 2' (formant boisseau) est avantageusement apte et destinée à être basculée, par pivotement en rotation contrôlée de la seconde partie 6 du mécanisme de transmission sous forme de came rotatoire, entre deux positions stables, à savoir une première position dans laquelle la portion de conduit 2' relie de manière contiguë les ouvertures ou segments de conduit d'entrée 10 et de sortie 10' et une seconde position, par exemple décalée de 90° de la première position, dans laquelle le clapet d'obturation 11 vient en application intime sur l'ouverture d'entrée ou de sortie, de manière à fermer cette dernière de manière étanche.

Comme le montrent les figures 1, 10 et 17 notamment, le clapet d'obturation 11 est pourvu de moyens 12 d'appui et/ou de compression, évitant son contact ou fournissant un contact glissant avec le corps de vanne 3', notamment avec la face interne de la paroi périphérique cylindrique de ce dernier, ces moyens 12 s'escamotant ou s'effaçant lorsque l'organe fonctionnel 2 de la vanne 3 est en position(s) de fermeture et/ou d'ouverture, de manière à autoriser en position de fermeture une obturation étanche sous pression de l'ouverture d'entrée ou de sortie concernée, par exemple des formations saillantes 12 venant se loger dans des renfoncements 12' de forme complémentaire ménagés dans la paroi du corps de vanne 3', lorsque l'organe fonctionnel 2 est en position d'obturation ou d'ouverture (seule la variante avec escamotage en position d'obturation est représentée).

Ces moyens 12 assurent également un blocage de l'organe fonctionnel 2 en position d'obturation et/ou en position d'ouverture.

Selon une construction avantageuse du clapet d'obturation 11, ce dernier peut être constitué d'un corps de base 11' relié, le cas échéant à l'opposé des moyens 12, par l'intermédiaire d'une liaison pivot 11" à la portion de conduit 2', et en étant sollicité élastiquement à distance de ce dernier par un moyen ressort 11''', ledit corps de base 11' étant surmonté ou surmoulé par un matériau d'étanchéification 16, par exemple souple et déformable élastiquement.

De manière additionnelle, au moins certaines des positions stables de l'organe fonctionnel 2 peuvent correspondre à un état calé de moyens coopérants 9" et 9'" définissant par engagement réciproque un point dur, par exemple une formation saillante 9" de la seconde ou autre partie 6 montée en rotation et des formations saillantes 9'" correspondantes du boîtier ou corps 3' du moyen 3 de régulation/contrôle.

Les deux types de formations saillantes 9" et 9''', ou au moins l'un des deux types, présente(nt) avantageusement une constitution déformable (structure ou matériau autorisant une déformation élastique sous contrainte) ou est(sont) disposé(s) sur une partie du boîtier 1', corps de vanne 3' ou seconde partie 6 apte à une telle déformation (par exemple une lame ressort ou une lame déformable 18 définie dans la came 6 par découpe de cette dernière - voir notamment figures 2A, 4A, 14A, 18A, 19D).

Le dispositif 1 selon l'invention peut aussi intégrer des moyens de butée 17, 17' qui limitent physiquement par coopération le battement angulaire de l'organe 2 ou de la seconde partie 6 et empêchent un déplacement au-delà des positions stables, dans le sens des directions de déplacement aboutissant à ces dernières.

A titre d'exemple, ces moyens de butée 17, 17' peuvent être constitués par des formations fonctionnellement complémentaires de l'organe 2 ou de la seconde partie 6, d'une part, et du corps de vanne 3' ou du boîtier 1', d'autre part, ces formations 17, 17' venant en contact mutuel et arrêtant de ce fait en position l'organe 2 ou la seconde partie 6 dans leur direction de déplacement à l'arrivée dans les positions stables respectivement concernées.

La présente invention concerne également, d'une part, un module de vanne 14 à au moins deux positions, en particulier vanne tout ou rien, comprenant un corps de vanne 3' et un organe fonctionnel 2, caractérisé en ce que l'organe fonctionnel 2 de la vanne 3 est commandé par un dispositif 1 tel que décrit ci-dessus et, d'autre part, un circuit de circulation de fluide liquide ou gazeux, caractérisé en ce qu'il comprend au moins un module de vanne 3, 14, tel qu'évoque précédemment et représenté notamment aux dessins annexés.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'actionnement et de verrouillage amovible dans au moins deux positions ou états stables ou fonctionnellement déterminé(e)s d'un organe fonctionnel, par exemple l'organe fonctionnel d'un moyen de régulation/contrôle de circulation de fluide tel qu'une vanne ou analogue, comprenant essentiellement, d'une part, un actionneur présentant au moins une configuration ou une position stable en l'absence de toute sollicitation active ou positive et, d'autre part, un mécanisme de transmission du mouvement comportant au moins deux parties fonctionnelles coopérantes dont une première est reliée cinématiquement à l'actionneur, préférentiellement mécaniquement à la partie mobile ou d'entraînement de l'actionneur, et dont une autre ou la seconde partie est reliée cinématiquement à l'organe fonctionnel mobile dans un boîtier ou corps creux, dispositif (1) **caractérisé en ce que** chacun(e) des positions ou états stables de l'organe fonctionnel (2), préférentiellement au moins au nombre de deux, correspond à la, respectivement à une, position ou configuration stable passive de l'actionneur (4), dans laquelle ce dernier a une consommation d'énergie nulle et dans laquelle il demeure figé, en l'absence de sollicitation externe ou d'alimentation, **en ce que** le mouvement de la seconde partie (6) du mécanisme est un mouvement discontinu, alternatif ou cyclique, commutant l'organe fonctionnel (2) successivement entre ses états stables, sous l'action positive d'entraînement de la première partie (5) entraînée par l'actionneur (4), et **en ce que** dans au moins un(e), préférentiellement chacun(e) de ces positions ou états stables de l'organe fonctionnel (2), la première partie (5) du mécanisme de transmission du mouvement engage, directement ou indirectement, la seconde ou autre partie (6) de manière à réaliser ou à contribuer à un blocage en position mécanique de cette dernière.

2. Dispositif selon la revendication 1, **caractérisé en ce que** la seconde ou autre partie (6) du mécanisme de transmission de mouvement est montée en rotation, **en ce que** les positions ou états stables de l'organe fonctionnel (2) correspondent à des positions angulaires spécifiques autour de l'axe de rotation (X) de ladite seconde ou autre partie (6), associées chacune à un état ou à une position stable ou fonctionnellement déterminé(e) de l'organe fonctionnel (2), et **en ce que** la seconde partie (6) est reliée rigidement à l'organe fonctionnel (2), son axe de rotation (X) étant préférentiellement confondu avec l'axe de rotation (X') de l'organe fonctionnel (2), ou **en ce que** la seconde partie (6) est reliée cinématiquement à l'organe fonctionnel (2).

3. Dispositif selon l'une quelconque des revendications 1 et 2, **caractérisé en ce que** la première partie (5) du mécanisme de transmission du mouvement coopère avec la seconde ou autre partie (6) dudit mécanisme par une liaison de transmission unidirectionnelle de mouvement, préférentiellement avec modification de la direction, du sens et/ou du type de mouvement constituant préférentiellement une liaison cinématique intermittente, s'établissant le temps de la transmission du mouvement nécessaire pour amener l'organe fonctionnel (2) d'une position stable à l'autre ou une autre position stable.

4. Dispositif selon l'une quelconque des revendications 1 à 3, **caractérisé en ce que** la liaison d'entraînement par intermittence, réalisant une transmission de mouvement entre la première partie (5) et la seconde partie (6) lors des phases de déplacement de l'organe fonctionnel (2), est formée par un engagement mécanique débrayable entre ces deux parties (5 et 6) autorisant un mouvement relatif entre eux sans transmission effective de mouvement à la seconde partie (6) lors de phases de repositionnement relatif de la première partie (5) vers une position d'attente, aboutissant à une reconfiguration du mécanisme de transmission en vue de la phase de déplacement suivante de l'organe fonctionnel (2), et correspondant à une position ou configuration stable de l'actionneur (4).

5. Dispositif selon la revendication 4, **caractérisé en ce que** la seconde partie (6) est bloquée en position durant les phases de reconfiguration, par exemple par l'intermédiaire de moyens (9", 9'" ; 12, 12') mutuellement coopérants formant des puits de potentiel, des points durs ou analogues.

6. Dispositif selon l'une quelconque des revendications 1 à 5, **caractérisé en ce que** l'organe fonctionnel (2) comporte deux positions ou états stables, ces deux positions étant atteintes par des actions similaires du mécanisme de transmission (5, 6), générant un mouvement alternatif commutant l'organe fonctionnel (2) successivement entre ses états stables.

7. Dispositif selon l'une quelconque des revendications 1 à 6, **caractérisé en ce que** le blocage en position de la seconde ou autre partie (6) dans chacun(e) des positions ou états stables de l'organe fonctionnel (2) résulte de la nature irréversible de la transmission de mouvement entre les deux parties (5 et 6) constitutives du mécanisme de transmission liée à un engagement unilatéral débrayable de ces deux parties et/ou de l'engagement mécanique mutuel de deux parties complémentaires (9 et 9') d'un moyen spécifique de blocage, associées chacune à l'une desdites au moins deux parties (5 et 6) du mécanisme.

8. Dispositif selon l'une quelconque des revendications 1 à 7, **caractérisé en ce que** la ou chaque configuration ou position stable de l'actionneur (4), en l'absence de toute sollicitation active ou positive, est obtenue ou atteinte et, le cas échéant, maintenue, par l'intermédiaire d'un moyen d'accumulation d'énergie potentielle (7), préférentiellement d'énergie élastique, associé ou intégré audit actionneur (4).

9. Dispositif selon l'une quelconque des revendications 1 à 8, **caractérisé en ce que** l'actionneur (4) est un actionneur à mouvement essentiellement translatif du type choisi dans le groupe formé par les actionneurs électriques, hydrauliques, pneumatiques, électromagnétiques, à élément dilatant ou à alliage à mémoire de forme.

10. Dispositif selon la revendication 9, **caractérisé en ce que** l'actionneur (4) se présente sous la forme d'un vérin pneumatique ou hydraulique dont la tige de commande ou d'entraînement correspond ou est assujettie à la première partie (5) du mécanisme de transmission de mouvement, cette tige (5) constituant l'organe mobile (4') de l'actionneur ou étant relié à celui-ci, le cas échéant de manière articulée.

11. Dispositif selon l'une quelconque des revendications 1 à 10, **caractérisé en ce que** la première partie (5) du mécanisme de transmission du mouvement est reliée directement ou indirectement, par une liaison articulée (8), à une partie (4') mobile en translation de l'actionneur (4), ladite liaison articulée (8) autorisant un pivotement limité autour d'au moins un axe perpendiculaire à la direction de translation (DT) de la partie mobile (4') de l'actionneur (4).

12. Dispositif suivant l'une quelconque des revendications 1 à 11, **caractérisé en ce que** l'actionneur (4) est un actionneur pneumatique dont la partie mobile consiste en une membrane élastiquement déformable ou une partie de paroi mobile (4') à laquelle est reliée la première partie (5) et qui délimite partiellement une chambre de commande (4") pouvant être reliée sélectivement, d'une part, à une réserve de vide ou à une source de pression pneumatique et, d'autre part, à l'atmosphère, ce sous le contrôle d'une électrovanne ou d'un organe sélecteur analogue (13), alimenté(e) uniquement durant les phases de commutation de l'organe.

13. Dispositif selon l'une quelconque des revendications 1 à 12, **caractérisé en ce que** la première partie (5) est soumise à un mouvement essentiellement en translation et **en ce que** la seconde partie (6) est soumise à un mouvement de rotation, la coopération entre ces deux parties (5, 6) du mécanisme de transmission du mouvement réalisant une transformation de type de mouvement avec un entraînement unidirectionnel.

14. Dispositif selon la revendication 13, **caractérisé en ce que** les moyens mutuellement coopérants (5', 6') de la première et de la seconde partie (5 et 6) du mécanisme de transmission présentent des arrangements et/ou des structures symétriques, pour la première partie (5) par rapport à l'axe ou à la direction de translation (DT) et pour la seconde partie (6) par rapport à l'axe de rotation (X), ces moyens étant alternativement en engagement mutuel d'entraînement, préférentiellement par accrochage, lors des phases de déplacement de l'organe fonctionnel (2) entre deux positions ou états stables, en particulier alternativement d'un côté et de l'autre de l'axe de translation (DT) de la première partie (5) et/ou alternativement selon deux positions angulaires différentes autour de l'axe de rotation (X) de la seconde partie (6), dans le cas d'un déplacement alternatif avec inversion du sens entre deux positions stables, ces engagements consécutifs alternés étant préparés lors de phases intercalées de reconfiguration avec désengagement du mécanisme de transmission correspondant à des positionnements stables ou d'attente de la première partie (5) et de l'actionneur (4).

15. Dispositif selon la revendication 9 ou 10 ou 14, **caractérisé en ce que** la seconde partie (6) du mécanisme de transmission du mouvement consiste en une came rotatoire, solidaire en rotation de l'organe fonctionnel (2) et comportant au moins deux sites d'accrochage (6') décalés angulairement autour de l'axe de rotation (X) de la came (6) et **en ce que** la première partie (5) du mécanisme précité consiste en une tige d'entraînement pourvue d'au moins un moyen d'accrochage (5'), préférentiellement de deux moyens d'accrochage arrangés de manière symétrique de part et d'autre de la tige, ledit moyen d'accrochage (5'), ou chaque moyen d'accrochage (5') à tour de rôle, venant en engagement temporaire avec l'un des sites d'accrochage (6') de la came (6), en vue de sa rotation sur une fraction de tour, lors d'un déplacement en translation de la tige d'entraînement (5) provoquée du fait d'une sollicitation positive ou active de l'actionneur (4), ce jusqu'à aboutir à une position stable indexée de l'organe fonctionnel (2), ledit moyen d'accrochage (5') étant alors désengagé dudit site d'accrochage (6') et ladite tige d'entraînement (5) déplacée et maintenue dans une position d'attente correspondant à la ou à une position stable passive de l'actionneur (4) et correspondant à une configuration du mécanisme de transmission (5, 6) en prévision d'une transmission de mouvement amenant l'organe fonctionnel (2) vers l'autre ou une autre position stable, lors d'une activation consécutive de l'actionneur (4).

16. Dispositif selon les revendications 9, 10 ou 14, **caractérisé en ce que** la seconde partie (6) du mécanisme de transmission du mouvement consiste en une came rotatoire, solidaire en rotation de l'organe fonctionnel (2) et comportant une rainure (15) formant chemin de came et **en ce que** la première partie (5) dudit mécanisme consiste en une tige d'entraînement pourvue d'un moyen d'accrochage (5') engagé avec faculté de circulation dans la rainure (15), cette dernière comprenant des sites d'accrochage (6') pour le moyen (5') en vue d'une rotation de la came (6) sur une fraction de tour, lors d'un déplacement en translation de la tige d'entraînement (5) provoqué du fait d'une sollicitation positive ou active de l'actionneur (4), ce jusqu'à aboutir à une position stable indexée de l'organe fonctionnel (2), ledit moyen d'accrochage (5') étant alors désengagé dudit site d'accrochage (6') et ladite tige d'entraînement (5) déplacée et maintenue dans une position d'attente correspondant à la ou à une position stable passive de l'actionneur (4) et correspondant à une configuration du mécanisme de transmission (5, 6) en prévision d'une transmission de mouvement amenant l'organe fonctionnel (2) vers l'autre ou une autre position stable, lors d'une activation consécutive de l'actionneur (4).

17. Dispositif selon la revendication 15 ou 16, **caractérisé en ce que** le désengagement du moyen d'accrochage (5') considéré, par exemple une extrémité en forme de crochet, un doigt ou un ergot, d'avec le site d'accrochage (6') concerné, par exemple sous la forme d'un doigt, d'un ergot ou d'une extrémité de rainure, et le déplacement de la tige d'entraînement (5) le comportant dans la position d'attente sont réalisés automatiquement sous l'action d'un moyen (7) d'accumulation d'énergie potentielle de l'actionneur (4), chargé lors du déplacement en rotation précédent de la came (6) dans une position indexée, et **en ce que**, en position d'attente, le moyen d'accrochage (5'), ou l'autre moyen d'accrochage (5'), est positionné pour venir automatiquement en engagement d'entraînement avec l'autre site d'accrochage (6'), ou le site d'accrochage (6') suivant, positionné de façon adéquate suite à la rotation précédente de la came (6), lors du déplacement suivant en translation de la tige d'entraînement (5) du fait d'une sollicitation positive ou active de l'actionneur (4).

18. Dispositif selon l'une quelconque des revendications 15 et 16, pour autant que cette dernière se rattache à la revendication 14, **caractérisé en ce que** lors du déplacement de la tige d'entraînement (5) vers sa position stable, le moyen d'accrochage unique (5') ou l'autre moyen d'accrochage (5') passe à côté ou par-dessus le site d'accrochage (6') de la came (6) rotatoire, avec lequel il est destiné à venir en prise lors du déplacement suivant de la tige d'entraînement (5) du fait d'une sollicitation positive ou active de l'actionneur (4), par pivotement forcé de ladite tige d'entraînement (5) au niveau de la liaison articulée (8), par exemple provoqué par glissement de ladite tige (5) en appui sur lesdits sites d'accrochage (6'), au niveau d'une surface en pente (6") formée sur le moyen d'accrochage (5') ou sur les sites d'accrochage (6').

19. Dispositif selon l'une quelconque des revendications 15 à 18, **caractérisé en ce que** la tige d'entraînement (5) comporte une première partie (9) d'un moyen de blocage en position de la came rotatoire (6) et **en ce que** cette dernière est pourvue de plusieurs formations (9'), associées chacune à un site d'accrochage (6') et constituant chacune pour une position stable déterminée de l'organe fonctionnel (2), et donc pour une position déterminée en rotation de la came rotatoire (6), une seconde partie fonctionnellement coopérante dudit moyen de blocage, les deux parties mutuellement complémentaires (9, 9'), par exemple mâle et femelle ou en creux et saillant, du moyen de blocage étant fonctionnellement coopérantes en vue du verrouillage en position de rotation de la came (6), en position d'attente de la tige d'entraînement (5).

20. Dispositif selon la revendication 19, **caractérisé en ce que** la première partie (9) du moyen de blocage consiste en un logement formé sur ou dans la tige d'entraînement (5) et **en ce que** les formations (9') de la came rotatoire (6) constituant respectivement la seconde partie dudit moyen de blocage consistent chacune en une patte destinée à venir s'emboîter avec ajustement dans le logement précité, en fin du mouvement de déplacement de la tige d'entraînement (5) avant son arrivée dans une position d'attente.

21. Dispositif selon la revendication 19, **caractérisé en ce que** la première partie (9) du moyen de blocage (9, 9') consiste en une patte ou un doigt formé(e) sur la tige d'entraînement (5) et **en ce que** les formations (9') de la came rotatoire (6) consistent en des dépressions ou des indentations ménagées sur le pourtour de cette dernière, ladite patte ou ledit doigt (9) venant se loger dans une desdites dépressions ou indentations (9') en fin du mouvement de déplacement de la tige d'entraînement (5) avant son arrivée dans une position d'attente.

22. Dispositif selon la revendication 19, **caractérisé en ce que** la première partie (9) du moyen de blocage correspond au moyen d'accrochage (5') sous forme de doigt ou d'ergot de la tige d'entraînement (5) et **en ce que** les formations (9') de la came rotatoire (6) pourvue d'une rainure (15) consistent en des portions déformées latéralement de ladite rainure formant sites de réception avec imbrication du doigt ou de l'ergot (5'), ce dernier venant se loger dans une de ces portions (9') en fin du mouvement de déplacement de la tige d'entraînement (5) avant son arrivée dans une position d'attente.

23. Dispositif selon l'une quelconque des revendications 20 à 22, **caractérisé en ce que** la coopération mutuelle des première et seconde parties (9 et 9') du moyen de blocage en position d'attente de la tige d'entraînement (5), et donc le blocage en rotation de la came (6) et de l'organe (2), est maintenue sous l'action du moyen (7) d'accumulation d'énergie potentielle.

24. Dispositif selon l'une quelconque des revendications 1 à 23, **caractérisé en ce que** l'organe fonctionnel (2) consiste en un organe fonctionnel d'une vanne (3) à deux positions, par exemple d'une vanne tout ou rien, éventuellement du type à faible fuite ou à fuite nulle en position fermée.

25. Dispositif selon la revendication 24, **caractérisé en ce que** l'organe fonctionnel (2) consiste en une portion de conduit (2') montée pivotante dans le corps de vanne (3'), avantageusement rectiligne profilé et dont la section correspond préférentiellement aux sections des ouvertures ou segments de conduit d'entrée (10) et de sortie (10') du corps de vanne (3') traversé par le fluide à réguler, ladite portion de conduit (2') étant pourvue latéralement d'un clapet d'obturation (11), et **en ce que** ladite portion de conduit (2') est apte et destinée à être basculée, par pivotement en rotation contrôlée de la seconde partie (6) du mécanisme de transmission sous forme de came rotatoire, entre deux positions stables, à savoir une première position dans laquelle la portion de conduit (2') relie de manière contiguë les ouvertures ou segments de conduit d'entrée (10) et de sortie (10') et une seconde position, par exemple décalée de 90° de la première position, dans laquelle le clapet d'obturation (11) vient en application intime sur l'ouverture d'entrée ou de sortie, de manière à fermer cette dernière de manière étanche.

26. Dispositif selon la revendication 25, **caractérisé en ce que** le clapet d'obturation (11) est pourvu de moyens (12) d'appui et/ou de compression, évitant son contact ou fournissant un contact glissant avec le corps de vanne (3'), notamment avec la face interne de la paroi périphérique cylindrique de ce dernier, ces moyens (12) s'escamotant ou s'effaçant lorsque l'organe fonctionnel (2) de la vanne (3) est en position(s) de fermeture et/ou d'ouverture, de manière à autoriser en position de fermeture une obturation étanche sous pression de l'ouverture d'entrée ou de sortie concernée, par exemple des formations saillantes (12) venant se loger dans des renfoncements (12') de forme complémentaire ménagés dans la paroi du corps de vanne (3'), lorsque l'organe fonctionnel (2) est en position d'obturation ou d'ouverture.

27. Dispositif selon l'une quelconque des revendications 25 et 26, **caractérisé en ce que** le clapet d'obturation (11) est constitué d'un corps de base (11') relié, le cas échéant à l'opposé des moyens (12), par l'intermédiaire d'une liaison pivot (11") à la portion de conduit (2'), et en étant sollicité élastiquement à distance de ce dernier par un moyen ressort (11'''), ledit corps de base (11') étant surmonté ou surmoulé par un matériau d'étanchéification (16).

28. Dispositif selon l'une quelconque des revendications 1 à 27, **caractérisé en ce qu'**au moins certaines des positions stables de l'organe fonctionnel (2) correspondent à un état calé de moyens coopérants (9" et 9''') définissant par engagement réciproque un point dur, par exemple une formation saillante (9") de la seconde ou autre partie (6) montée en rotation et des formations saillantes (9''') correspondantes du boîtier ou corps (3') du moyen (3) de régulation/contrôle.

29. Module de vanne à au moins deux positions, en particulier vanne tout ou rien, comprenant un corps de vanne (3') et un organe fonctionnel (2), **caractérisé en ce que** l'organe fonctionnel (2) de la vanne (3) est commandé par un dispositif (1) selon l'une quelconque des revendications 1 à 27, intégré audit module.

30. Circuit de circulation de fluide liquide ou gazeux, **caractérisé en ce qu'**il comprend au moins un module de vanne (3) selon la revendication 29.

## Patentansprüche

1. Abnehmbare Vorrichtung zum Betätigen und Sperren eines Funktionsorgans in mindestens zwei stabilen oder funktionell bestimmten Positionen oder Zuständen, beispielsweise das Funktionsorgan eines Mittels zum Regeln/Steuern eines Flüssigkeitsstroms wie ein Ventil oder dergleichen, die im Wesentlichen einerseits ein Stellglied, das mindestens eine Konfiguration oder eine stabile Position in Abwesenheit einer aktiven oder positiven Beanspruchung aufweist, und andererseits einen Mechanismus zum Übertragen der Bewegung aufweist, der mindestens zwei zusammenwirkende funktionelle Teile aufweist, wovon ein erster kinematisch mit dem Stellglied, vorzugsweise mechanisch mit dem beweglichen Teil oder dem Antriebsteil des Stellglieds, verbunden ist, und wovon ein anderer oder der zweite Teil kinematisch mit dem beweglichen Funktionsorgan in einem Gehäuse oder Hohlkörper verbunden ist, **dadurch gekennzeichnet, dass** jede der stabilen Positionen oder jeder der stabilen Zustände des Funktionsorgans (2), vorzugsweise mindestens zwei an der Zahl, jeweils einer stabilen passiven Position oder Konfiguration des Stellglieds (4) entspricht, in der dieses Letztere einen Energieverbrauch aufweist, der gleich Null ist, und in der es ohne externe Beanspruchung oder Beaufschlagung starr bleibt,
dadurch, dass die Bewegung des zweiten Teils (6) des Mechanismus eine diskontinuierliche, alternierende oder zyklische Bewegung ist, die das Funktionsorgan (2) nacheinander zwischen seinen stabilen Zuständen unter der positiven Antriebseinwirkung des ersten Teils (5), der durch das Stellglied (4) angetrieben wird, umschaltet, und dadurch, dass in mindestens einer (einem), vorzugsweise jeder (jedem) dieser stabilen Positionen oder Zustände des Funktionsorgans (2) der erste Teil (5) des Mechanismus zum Übertragen der Bewegung direkt oder indirekt in den zweiten oder anderen Teil (6) derart eingreift, um eine mechanische Blockierung in Position dieses Letzteren zu erreichen oder dazu beizutragen.

2. Vorrichtung nach Anspruch 1, **dadurch gekennzeichnet, dass** der zweite oder andere Teil (6) des Mechanismus zum Übertragen der Bewegung drehbar befestigt ist, dadurch, dass die stabilen Positionen oder Zustände des Funktionsorgans (2) spezifischen Winkelpositionen um die Drehachse (X) des zweiten oder anderen Teils (6) entsprechen, die jeweils einem stabilen oder funktionell bestimmten Zustand oder einer stabilen oder funktionell bestimmten Position des Funktionsorgans (2) zugeordnet sind, und dadurch, dass der zweite Teil (6) mit dem Funktionsorgan (2) fest verbunden ist, wobei seine Drehachse (X) vorzugsweise mit der Drehachse (X') des Funktionsorgans (2) zusammenfällt, oder dadurch, dass der zweite Teil (6) kinematisch mit dem Funktionsorgan (2) verbunden ist.

3. Vorrichtung nach einem der Ansprüche 1 und 2, **dadurch gekennzeichnet, dass** der erste Teil (5) des Mechanismus zum Übertragen der Bewegung mit dem zweiten oder dritten Teil (6) des Mechanismus durch eine unidirektionale Bewegungsübertragungsverbindung, vorzugsweise mit Änderung der Richtung, der Seite und/oder der Art der Bewegung, die vorzugsweise eine intermittierende kinematische Verbindung bildet, zusammenwirkt, wobei die Zeit der Übertragung der Bewegung festlegt wird, die notwendig ist, um das Funktionsorgan (2) von einer stabilen Position in die andere oder eine andere stabile Position zu bringen.

4. Vorrichtung nach einem der Ansprüche 1 bis 3, **dadurch gekennzeichnet, dass** die intermittierende Antriebsverbindung, die während der Phasen des Verschiebens des Funktionsorgans (2) eine Bewegungsübertragung zwischen dem ersten Teil (5) und dem zweiten Teil (6) durchführt, durch ein entkoppelbares mechanisches Ineinandergreifen zwischen diesen zwei Teilen (5 und 6) gebildet ist, das eine relative Bewegung zwischen ihnen ohne tatsächliche Bewegungsübertragung auf den zweiten Teil (6) bei den Phasen des relativen Umpositionierens des ersten Teils (5) in Richtung von einer Warteposition ermöglicht, die zu einer Neukonfiguration des Übertragungsmechanismus für die folgende Verschiebungsphase des Funktionsorgans (2) führt und die einer stabilen Position oder Konfiguration des Stellglieds (4) entspricht.

5. Vorrichtung nach Anspruch 4, **dadurch gekennzeichnet, dass** der zweite Teil (6) bei den Phasen der Neukonfiguration beispielsweise durch wechselseitig zusammenwirkende Mittel (9", 9"'; 12, 12'), die Potentialsenken, harte Punkte oder dergleichen bilden, in Position blockiert ist.

6. Vorrichtung nach einem der Ansprüche 1 bis 5, **dadurch gekennzeichnet, dass** das Funktionsorgan (2) zwei stabile Positionen oder Zustände aufweist, wobei diese zwei Positionen durch ähnliche Aktionen des Übertragungsmechanismus (5, 6) erreicht werden, indem eine hin- und hergehende Bewegung erzeugt wird, die das Funktionsorgan (2) nacheinander zwischen seinen stabilen Zuständen umschaltet.

7. Vorrichtung nach einem der Ansprüche 1 bis 6, **dadurch gekennzeichnet, dass** das Blockieren in Position des zweiten oder anderen Teils (6) in jeder (jedem) der stabilen Positionen oder Zuständen des Funktionsorgans (2) aus der irreversiblen Natur der Bewegungsübertragung zwischen den zwei Teilen (5 und 6), die den Übertragungsmechanismus bilden, ergibt, die mit einem entkoppelbaren einseitigen Ineinandergreifen dieser zwei Teile und/oder dem gegenseitigen mechanischen Eingreifen der zwei komplementären Teile (9 und 9') eines spezifischen Blockiermittels verbunden ist, die jeweils mit einem der mindestens zwei Teile (5 und 6) des Mechanismus verbunden sind.

8. Vorrichtung nach einem der Ansprüche 1 bis 7, **dadurch gekennzeichnet, dass** die oder jede stabile Konfiguration oder Position des Stellglieds (4) in Abwesenheit einer aktiven oder positiven Beanspruchung durch ein Mittel zum Speichern von potentieller Energie (7), vorzugsweise von elastischer Energie, das mit dem Stellglied (4) verbunden oder darin integriert ist, erhalten oder erreicht und gegebenenfalls beibehalten wird.

9. Vorrichtung nach einem der Ansprüche 1 bis 8, **dadurch gekennzeichnet, dass** das Stellglied (4) ein Stellglied mit im Wesentlichen translatorischer Bewegung des Typs ist, der ausgewählt ist aus der Gruppe, die gebildet ist aus den elektrischen, hydraulischen, pneumatischen, elektromagnetischen Stellgliedern mit sich ausdehnendem Element oder mit Formgedächtnislegierung.

10. Vorrichtung nach Anspruch 9, **dadurch gekennzeichnet, dass** das Stellglied (4) die Form eines pneumatischen oder hydraulischen Zylinders aufweist, dessen Steuer- oder Antriebsstange dem ersten Teil (5) des Mechanismus zum Übertragen der Bewegung entspricht oder daran befestigt ist, wobei diese Stange (5) das bewegliche Organ (4') des Stellglieds bildet oder mit diesem gegebenenfalls gelenkig verbunden ist.

11. Vorrichtung nach einem der Ansprüche 1 bis 10, **dadurch gekennzeichnet, dass** der erste Teil (5) des Mechanismus zum Übertragen der Bewegung direkt oder indirekt durch eine Gelenkverbindung (8) mit einem translatorisch beweglichen Teil (4') des Stellglieds (4) verbunden ist, wobei die Gelenkverbindung (8) ein begrenztes Schwenken um mindestens eine Achse ermöglicht, die senkrecht zu der Translationsrichtung (DT) des beweglichen Teils (4') des Stellglieds (4) ist.

12. Vorrichtung nach einem der Ansprüche 1 bis 11, **dadurch gekennzeichnet, dass** das Stellglied (4) ein pneumatisches Stellglied ist, dessen beweglicher Teil aus einer elastisch verformbaren Membran oder einem beweglichen Wandteil (4') besteht, mit dem der erste Teil (5) verbunden ist und der eine Steuerkammer (4") teilweise begrenzt, die einerseits an einen Vakuumbehälter oder an eine Pneumatikdruckquelle und andererseits an die Atmosphäre selektiv angeschlossen werden kann, und dies gesteuert von einem Magnetventil oder einem ähnlichen Wahlorgan (13), das nur während der Umschaltphasen des Organs gespeist wird.

13. Vorrichtung nach einem der Ansprüche 1 bis 12, **dadurch gekennzeichnet, dass** der erste Teil (5) einer im Wesentlichen translatorischen Bewegung unterworfen ist und dadurch, dass der zweite Teil (6) einer Drehbewegung unterworfen ist, wobei das Zusammenwirken dieser zwei Teile (5, 6) des Mechanismus zum Übertragen der Bewegung eine Umwandlung des Typs der Bewegung mit einem unidirektionalen Antrieb durchführt.

14. Vorrichtung nach Anspruch 13, **dadurch gekennzeichnet, dass** die wechselseitig zusammenwirkenden Mittel (5', 6') des ersten und zweiten Teils (5 und 6) des Übertragungsmechanismus symmetrische Anordnungen und/oder Strukturen für den ersten Teil (5) in Bezug auf die Achse oder die Translationsrichtung (DT) und für den zweiten Teil (6) in Bezug auf die Drehachse (X) aufweisen, wobei diese Mittel abwechselnd in gegenseitigem Antriebseingriff, vorzugsweise durch Einhaken, bei den Phasen des Verschiebens des Funktionsorgans (2) zwischen zwei stabilen Positionen oder Zuständen, insbesondere abwechselnd von einer Seite zur anderen der Translationsachse (DT) des ersten Teils (5) und/oder abwechselnd in zwei verschiedenen Winkelpositionen um die Rotationsachse (X) des zweiten Teils (6) im Falle von einer Hin- und Herbewegung mit Umkehrung der Richtung zwischen zwei stabilen Positionen, sind, wobei diese abwechselnden aufeinanderfolgenden Eingriffe bei den zwischengeschalteten Phasen der Neukonfiguration mit Lösen des Übetragungsmechanismus, das stabilen Positionierungen oder Wartepositionierungen des ersten Teils (5) und des Stellglieds (4) entspricht, vorbereitet werden.

15. Vorrichtung nach Anspruch 9 oder 10 oder 14, **dadurch gekennzeichnet, dass** der zweite Teil (6) des Mechanismus zum Übertragen der Bewegung aus einem Drehnocken besteht, der mit dem Funktionsorgan (2) drehfest verbunden ist und mindestens zwei Einhakstellen (6') aufweist, die um die Drehachse (X) des Nockens (6) winkelversetzt sind, und dadurch, dass der erste Teil (5) des oben genannten Mechanismus aus einer Antriebsstange besteht, die mit mindestens einem Einhakmittel (5'), vorzugsweise mit zwei Einhakmitteln, die symmetrisch auf beiden Seiten der Stange angeordnet sind, versehen ist, wobei das Einhakmittel (5') oder jedes Einhakmittel (5') abwechselnd vorrübergehend mit einer der Einhakstellen (6') des Nockens (6) für seine Drehung um einen Bruchteil einer Umdrehung bei einem translatorischen Verschieben der Antriebsstange (5), das durch eine aktive oder positive Beanspruchung des Stellglieds (4) bewirkt wird, in Eingriff kommt, und dies, bis eine indexierte stabile Position des Funktionsorgans (2) erreicht wird, wobei das Einhakmittel (5') dann von der Einhakstelle (6') gelöst wird und die Antriebsstange (5) in eine Warteposition verschoben und darin gehalten wird, die der oder einer passiven stabilen Position des Stellglieds (4) entspricht und einer Konfiguration des Übertragungsmechanismus (5, 6) in Erwartung einer Bewegungsübertragung entspricht, die das Funktionsorgan (2) zu der anderen oder einer anderen stabilen Funktion bei einer nachfolgenden Aktivierung des Stellglieds (4) bringt.

16. Vorrichtung nach Anspruch 9, 10 oder 14, **dadurch gekennzeichnet, dass** der zweite Teil (6) des Mechanismus zum Übertragen der Bewegung aus einem Drehnocken besteht, der mit dem Funktionsorgan (2) drehfest verbunden ist und eine Nut (15) aufweist, die eine Nockenbahn bildet, und dadurch, dass der erste Teil (5) des Mechanismus aus einer Antriebsstange besteht, die mit mindestens einem Einhakmittel (5') versehen ist, das mit der Fähigkeit des Umlaufens in der Nut (15) in Eingriff ist, wobei diese Letztere Einhakstellen (6') für das Mittel (5') für eine Drehung des Nockens (6) um einen Bruchteil einer Umdrehung bei einem translatorischen Verschieben der Antriebsstange (5), das durch eine aktive oder positive Beanspruchung des Stellglieds (4) bewirkt wird, aufweist, und dies, bis eine indexierte stabile Position des Funktionsorgans (2) erreicht wird, wobei das Einhakmittel (5') dann von der Einhakstelle (6') gelöst wird und die Antriebsstange (5) in eine Warteposition verschoben und darin gehalten wird, die der oder einer passiven stabilen Position des Stellglieds (4) entspricht und einer Konfiguration des Übertragungsmechanismus (5, 6) in Erwartung einer Bewegungsübertragung entspricht, die das Funktionsorgan (2) zu der anderen oder einer anderen stabilen Funktion bei einer aufeinanderfolgenden Aktivierung des Stellglieds (4) bringt.

17. Vorrichtung nach Anspruch 15 oder 16, **dadurch gekennzeichnet, dass** das Lösen des betreffenden Einhakmittels (5'), beispielsweise ein Ende in Form eines Hakens, ein Finger oder ein Sporn, aus der betreffenden Einhakstelle (6'), beispielsweise in Form eines Fingers, eines Sporns oder eines Nutendes, und das Verschieben der Antriebsstange (5), die sie enthält, in die Warteposition automatisch unter der Einwirkung eines Mittels (7) zum Speichern von potentieller Energie des Stellglieds (4) durchgeführt werden, das bei der vorhergehenden Drehbewegung des Nockens (6) in eine indexierte Position beaufschlagt wird, und dadurch, dass das Einhakmittel (5') oder das andere Einhakmittel (5') in Warteposition positioniert ist, um mit der anderen Einhakstelle (6') oder der folgenden Einhakstelle (6'), die infolge der vorhergehenden Drehung des Nockens (6) in geeigneter Weise positioniert ist, bei dem folgenden translatorischen Verschieben der Antriebsstange (5) durch eine aktive oder positive Beanspruchung des Stellglieds (4) automatisch in Antriebseingriff zu kommen.

18. Vorrichtung nach einem der Ansprüche 15 und 16, soweit sich dieser Letztere auf den Anspruch 14 zurück bezieht, **dadurch gekennzeichnet, dass** bei dem Verschieben der Antriebsstange (5) zu ihrer stabilen Position, das einzige Einhakmittel (5') oder das andere Einhakmittel (5') neben oder über der Einhakstelle (6') des Drehnockens (6) verläuft, mit dem es bestimmt ist, bei dem folgenden Verschieben der Antriebsstange (5) durch eine aktive oder positive Beanspruchung des Stellglieds (4) durch gezwungenes Schwenken der Antriebsstange (5) auf dem Niveau der Gelenkverbindung (8), beispielsweise verursacht durch Schwenken der Stange (5) in Anlage auf den besagten Einhakstellen (6') auf dem Niveau einer geneigten Fläche (6"), die auf dem Einhakmittel (5') oder auf den Einhakstellen (6') gebildet ist, in Eingriff zu kommen.

19. Vorrichtung nach einem der Ansprüche 15 bis 18, **dadurch gekennzeichnet, dass** die Antriebsstange (5) einen ersten Teil (9) eines Mittels zum Blockieren in Position des Drehnockens (6) aufweist und dadurch, dass dieser Letztere mit mehreren Formationen (9') versehen ist, die jeweils mit einer Einhakstelle (6') verbunden sind und jeweils für eine bestimmte stabile Position des Funktionsorgans (2) und somit für eine bestimmte Position in Drehung des Drehnockens (6) einen zweiten, funktionell zusammenwirkenden Teil des Blockiermittels bilden, wobei die zwei zueinander komplementären Teile (9, 9') des Blockiermittels, die beispielsweise männlich und weiblich oder hohl und hervorstehend sind, für das Verriegeln in Position der Drehung des Nockens (6) in der Warteposition der Antriebsstange (5) funktionell zusammenwirkend sind.

20. Vorrichtung nach Anspruch 19, **dadurch gekennzeichnet, dass** der erste Teil (9) des Blockiermittels aus einer Aufnahme besteht, die auf oder in der Antriebsstange (5) gebildet ist, und dadurch, dass die Formationen (9') des Drehnockens (6), die jeweils den zweiten Teil des Blockiermittels bilden, jeweils aus einer Lasche bestehen, die dazu bestimmt ist, in die oben genannte Aufnahme am Ende der Verschiebungsbewegung der Antriebsstange (5) vor ihrem Ankommen in einer Warteposition eingepasst zu werden.

21. Vorrichtung nach Anspruch 19, **dadurch gekennzeichnet, dass** der erste Teil (9) des Blockiermittels (9, 9') aus einer Lasche oder einem Finger besteht, die (der) auf oder in der Antriebsstange (5) gebildet ist, und dadurch, dass die Formationen (9') des Drehnockens (6) aus Vertiefungen oder Einkerbungen bestehen, die auf dem Umfang dieses Letzteren ausgebildet sind, wobei die Lasche oder der Finger (9) in einer der besagten Vertiefungen oder Einkerbungen (9') am Ende der Verschiebungsbewegung der Antriebsstange (5) vor ihrem Ankommen in einer Warteposition aufgenommen wird.

22. Vorrichtung nach Anspruch 19, **dadurch gekennzeichnet, dass** der erste Teil (9) des Blockiermittels einem Einhakmittel (5') in Form von einem Finger oder von einem Sporn der Antriebsstange (5) entspricht, und dadurch, dass die Formationen (9') des Drehnockens (6), der mit einer Nut (15) versehen ist, aus seitlich verformten Abschnitten der Nut bestehen, die Aufnahmestellen mit Verschachtelung des Fingers oder des Sporns (5') bilden, wobei dieser Letztere in einem dieser Abschnitte (9') am Ende der Verschiebungsbewegung der Antriebsstange (5) vor ihrem Ankommen in einer Warteposition aufgenommen wird.

23. Vorrichtung nach einem der Ansprüche 20 bis 22, **dadurch gekennzeichnet, dass** das wechselseitige Zusammenwirken des ersten und zweiten Teils (9 und 9') des Blockiermittels in Warteposition der Antriebsstange (5) und somit das Blockieren in Drehung des Nockens (6) und des Organs (2) unter der Einwirkung des Mittels (7) zum Speichern von potentieller Energie aufrechterhalten wird.

24. Vorrichtung nach einem der Ansprüche 1 bis 23, **dadurch gekennzeichnet, dass** das Funktionsorgan (2) aus einem Funktionsorgan eines Zweiwegeventils (3) besteht, beispielsweise eines Auf-Zu-Ventils, eventuell vom Typ mit geringer Leckage oder ohne Leckage in geschlossener Position.

25. Vorrichtung nach Anspruch 24, **dadurch gekennzeichnet, dass** das Funktionsorgan (2) aus einem Leitungsabschnitt (2') besteht, der drehbar in dem Ventilkörper (3') befestigt ist, der vorteilhafterweise geradlinig profiliert ist und dessen Querschnitt vorzugsweise den Querschnitten der Öffnungen oder Segmenten der Eintritts- (10) und Austrittsleitung (10') des Ventilkörpers (3') entspricht, durch den die zu regulierende Flüssigkeit fließt, wobei der Leitungsabschnitt (2') seitlich mit einer Verschlußklappe (11) versehen ist, und dadurch, dass der Leitungsabschnitt (2') geeignet und bestimmt ist, durch Schwenken in gesteuerter Drehung des zweiten Teils (6) des Übertragungsmechanismus in Form von einem Drehnocken zwischen zwei stabilen Positionen hin- und hergeschaltet zu werden, das heißt einer ersten Position, in der der Leitungsabschnitt (2') die Öffnungen oder Segmente der Eintritts- (10) und Austrittsleitung (10') in angrenzender Weise verbindet, und einer zweiten Position, die beispielsweise um 90° von der ersten Position versetzt ist, in der die Verschlußklappe (11) derart eng zum Aufliegen auf der Eintritts- oder Austrittsöffnung kommt, um diese Letztere dicht zu verschließen.

26. Vorrichtung nach Anspruch 25, **dadurch gekennzeichnet, dass** die Verschlußklappe (11) mit Mitteln (12) zum Aufliegen und/oder zum Komprimieren versehen ist, die ihren Kontakt mit dem Ventilkörper (3'), insbesondere mit der Innenseite der zylindrischen Innenwand dieses Letzteren, vermeiden oder einen gleitenden Kontakt damit bereitstellen, wobei diese Mittel (12) verschwinden gelassen oder entfernt werden, wenn sich das Funktionsorgan (2) des Ventils (3) in der Öffnungs- und/oder Schließposition befindet, derart, um in der Öffnungsposition ein dichtes Verschließen unter Druck der betreffenden Eintritts- oder Austrittsöffnung zu ermöglichen, wobei beispielsweise hervorstehende Formationen (12) in Vertiefungen (12') von komplementärer Form, die in der Wand des Ventilkörpers (3') ausgebildet sind, aufgenommen werden, wenn sich das Funktionsorgan (2) in der Schließ- oder Öffnungsposition befindet.

27. Vorrichtung nach einem der Ansprüche 25 und 26, **dadurch gekennzeichnet, dass** die Verschlußklappe (11) aus einem Grundkörper (11') gebildet ist, der gegebenenfalls gegenüberliegend von den Mitteln (12) durch eine Schwenkverbindung (11") mit dem Leitungsabschnitt (2') verbunden ist, und indem sie aus der Entfernung von diesem Letzteren durch ein Federmittel (11"') elastisch beaufschlagt wird, wobei der Grundkörper (11') von einem Dichtungsmaterial (16) überragt oder überformt ist.

28. Vorrichtung nach einem der Ansprüche 1 bis 27, **dadurch gekennzeichnet, dass** mindestens bestimmte der stabilen Positionen des Funktionsorgans (2) einem festgelegten Zustand von zusammenwirkenden Mitteln (9" und 9"') entsprechen, die durch gegenseitiges Ineinandergreifen einen harten Punkt definieren, beispielsweise eine hervorstehende Formation (9") des zweiten oder anderen Teils (6), der drehbar befestigt ist, und der entsprechenden hervorstehenden Formationen (9"') des Gehäuses oder Körpers (3') des Mittels (3) zum Regeln/Steuern.

29. Ventilmodul mit mindestens zwei Schaltstellungen, insbesondere Auf-Zu-Ventil, umfassend einen Ventilkörper (3') und ein Funktionsorgan (2), **dadurch gekennzeichnet, dass** das Funktionsorgan (2) des Ventils (3) durch eine Vorrichtung (1) nach einem der Ansprüche 1 bis 27 gesteuert ist, die in dem Ventilmodul integriert ist.

30. Zirkulationskreislauf einer flüssigen oder gasförmigen Flüssigkeit, **dadurch gekennzeichnet, dass** er ein Ventilmodul (3) nach Anspruch 29 aufweist.

## Claims

1. Actuating device, removably locking in at least two stable positions or states or which is functionally determined by a functional unit, for example the functional unit of a means of regulating/controlling the circulation of a fluid such as a valve or similar, essentially comprising, on the one hand, an actuator having at least one setting or a stable position in the absence of any active or positive force and, on the other hand, a movement transmission mechanism having at least two functional co-operating parts of which a first is connected kinematically to the actuator, preferably mechanically to the moving part or driven by the actuator, and of which another or the second part is connected kinematically to the movable functional unit in a casing or hollow body, said device (1) being **characterised in that** each of the stable positions or states of the functional unit (2), preferably at least two positions or states, correspond to the, respectively to one, stable steady state position or setting of the actuator (4), wherein the latter's energy consumption is zero and wherein it remains fixed in the absence of any external force or power source, wherein the movement of the second part (6) of the mechanism is a discontinuous, alternating or cyclic movement, switching the functional unit (2) successively between its stable states by the positive driving actuation of the first part (5) driven by the actuator (4), and wherein, in at least one, preferably each of these stable positions or states of the functional unit (2), the first part (5) of the movement transmission mechanism involves, directly or indirectly, the second or other part (6) in such a way that it accomplishes or contributes to the mechanical locking of the latter in position.

2. Device according to claim 1, **characterised in that** the second or other part (6) of the movement transmission mechanism is rotationally mounted, wherein the stable positions or states of the functional unit (2) correspond to the specific angular positions around the rotational axis (X) of the said second or other part (6), each associated with a stable state or position or which is functionally determined by the functional unit (2), and wherein the second part (6) is connected rigidly to the functional unit (2), its rotational axis (X) being preferably merged with the rotational axis (X') of the functional unit (2), or wherein the second part (6) is connected kinematically to the functional unit (2).

3. Device according to any one of claims 1 and 2, **characterised in that** the first part (5) of the movement transmission mechanism co-operates with the second or other part (6) of the said mechanism by a one-way movement transmission linkage, preferably with modification in the direction, course and/or type of movement constituting preferably an intermittent connection, establishing the time of the transmission of the movement needed to conduct the functional unit (2) from one stable position to the other or to another stable position.

4. Device according to any one of claims 1 to 3, **characterised in that** the intermittent drive connection, which transmits movement between the first part (5) and the second part (6) during movement phases of the functional unit (2), is formed by a detachable mechanical engagement between these two parts (5 and 6), allowing a relative movement between them without actually transmitting a movement to the second part (6) during relative repositioning phases of the first part (5) towards a stand-by position, terminating in a resetting of the transmission mechanism anticipating the next movement phase of the functional unit (2), and corresponding to a stable position or setting of the actuator (4).

5. Device according to claim 4, **characterised in that** the second part (6) is locked in position during the resetting phases, for example by the action of mutually co-operating means (9", 9'''; 12, 12') forming potential wells, hard stops or similar.

6. Device according to any one of claims 1 to 5, **characterised in that** the functional unit (2) has two stable positions or states, wherein these two positions are attained by similar actions of the transmission mechanism (5, 6), generating an alternating movement switching the functional unit (2) successively between these stable states.

7. Device according to any one of claims 1 to 6, **characterised in that** the locking in position of the second or other part (6) in each of the stable positions or states of the functional unit (2) is caused by the irreversible nature of the transmission of movement between the two parts (5 and 6) constituting the transmission mechanism connected with the unilateral disengageable engagement of these two parts and/or of the mutual mechanical engagement of two complementary parts (9 and 9') of a particular locking means, each connected to one of the said at least two parts (5 and 6) of the mechanism.

8. Device according to any one of claims 1 to 7, **characterised in that** the or each stable setting or position of the actuator (4), in the absence of any active or positive force, is obtained or achieved and, as the case may be, maintained, by means of a potential energy storage means (7), preferably elastic energy, associated with or integrated into said actuator (4).

9. Device according to any one of claims 1 to 8, **characterised in that** the actuator (4) is an actuator with an essentially translational movement of the type selected from the group consisting of electrical, hydraulic, pneumatic, or electromagnetic actuators, with an extending element or made of a shape memory alloy.

10. Device according to claim 9, **characterised in that** the actuator (4) takes the form of a pneumatic or hydraulic piston, of which the control or drive rod corresponds to or is subject to the first part (5) of the movement transmission mechanism, said rod (5) constituting the moving unit (4') of the actuator or being connected to the latter, if necessary in an articulated manner.

11. Device according to any one of claims 1 to 10, **characterised in that** the first part (5) of the movement transmission mechanism is connected, directly or indirectly, by an articulated linkage (8) to a translational moving part (4') of the actuator (4), wherein said articulated linkage (8) allows limited pivoting around at least one axis perpendicular to the translational direction (DT) of the moving part (4') of the actuator (4).

12. Device according to any one of claims 1 to 11, **characterised in that** the actuator (4) is a pneumatic actuator of which the moving part consists of an elastically deformable membrane or a part of a moving panel (4') to which the first part (5) is connected and which partially delimits a control chamber (4") capable of being connected selectively, on the one hand, to a vacuum reserve or to a pneumatic pressure source and, on the other hand, to the atmosphere, being controlled by a solenoid valve or by an analogue selector unit (13), powered only during the switching phases of the unit.

13. Device according to any one of claims 1 to 12, **characterised in that** the first part (5) is subjected to an essentially translational movement and wherein the second part (6) is subjected to a rotational movement, wherein the co-operation between these two parts (5, 6) of the movement transmission mechanism achieves a change in the type of movement with a one-way drive.

14. Device according to claim 13, **characterised in that** the mutually co-operating means (5', 6') of the first and second parts (5 and 6) of the transmission mechanism are arranged symmetrically and/or have symmetrical structures, in the case of the first part (5) relative to the axis or to the translational direction (DT) and in the case of the second part (6) relative to the rotational axis (X), wherein these means are mutually driven alternately, preferably by hooking, during the movement phases of the functional unit (2) between two stable positions or states, in particular alternately on one side and on the other of the translational axis (DT) of the first part (5) and/or alternately according to two different angular positions around the rotational axis (X) of the second part (6), in the case of an alternate movement with reversal of direction between two stable positions, wherein these consecutive alternate engagements are prepared during interposed resetting phases with disengagement of the transmission mechanism corresponding to the stable or stand-by positions of the first part (5) and of the actuator (4).

15. Device according to claim 9 or 10 or 14, **characterised in that** the second part (6) of the movement transmission mechanism consists of a rotary cam, fixed in rotation with the functional unit (2) and having at least two hooking points (6') offset angularly around the rotational axis (X) of the cam (6) and wherein the first part (5) of the aforementioned mechanism consists of a drive rod provided with at least one hooking means (5'), preferably with two hooking means arranged symmetrically on either side of the rod, said hooking means (5'), or each hooking means (5') in turn engaging temporarily with one of the hooking points (6') of the cam (6) so that it rotates through a fraction of a turn during a translational movement of the drive rod (5) caused by a positive or active force exerted by the actuator (4), wherein this takes place until a stable indexed position of the functional unit (2) is reached, wherein said hooking means (5') is then disengaged from the said hooking point (6') and the said drive rod (5) now being displaced and maintained in a stand-by position corresponding to the or to a stable position at rest of the actuator (4) and corresponding to a setting of the transmission mechanism (5, 6) ahead of a movement transmission taking the functional unit (2) towards the other or to another stable position during the next activation of the actuator (4).

16. Device according to claims 9, 10 or 14, **characterised in that** the second part (6) of the movement transmission mechanism consists of a rotary cam, fixed in rotation with the functional unit (2) and having a slot (15) forming a cam path and wherein the first part (5) of the said mechanism consists of a drive rod provided with a hooking means (5') able to circulate in the slot (15), wherein this latter comprises hooking points (6') for the means (5') so that when the cam (6) rotates through a fraction of a turn during a translational movement of the drive rod (5) caused by a positive or active force exerted by the actuator (4), this takes place until a stable indexed position of the functional unit (2) is reached, wherein said hooking means (5') is then disengaged from the said hooking point (6') and the said drive rod (5) is now displaced and maintained in a stand-by position corresponding to the or to a stable position at rest of the actuator (4) and corresponding to a setting of the transmission mechanism (5, 6) ahead of a movement transmission taking the functional unit (2) towards the other or to another stable position during the next activation of the actuator (4).

17. Device according to claim 15 or 16, **characterised in that** the disengagement of the hooking means (5') concerned, for example an end in the form of a hook, a finger or a lug, with which the hooking point (6') concerned, for example in the form of a finger, a lug or the end of a slot, and the movement of the drive rod (5) holding it in the stand-by position are achieved automatically by the action of a potential energy storage means (7) of the actuator (4), loaded during the preceding rotational movement of the cam (6) in an indexed position, and wherein, in the stand-by position, the hooking means (5'), or the other hooking means (5'), is positioned automatically in driving engagement with the other hooking point (6'), or the next hooking point (6'), positioned appropriately following the preceding rotation of the cam (6), during the next translational movement of the drive rod (5) caused by a positive or active force by the actuator (4).

18. Device according to any one of claims 15 and 16, inasmuch as this latter relates to claim 14, **characterised in that** during the movement of the drive rod (5) towards its stable position, the single hooking means (5') or the other hooking means (5') passes by or over the hooking point (6') of the rotary cam (6), with which it is intended catch during the next movement of the drive rod (5) due to a positive or active force by the actuator (4), by an enforced pivoting of said drive rod (5) by the articulated linkage (8), for example induced by the sliding of said rod (5), supported on the said hooking points (6'), by a sloping surface (6") formed on the hooking means (5') or on the hooking points (6').

19. Device according to any one of claims 15 to 18, **characterised in that** the drive rod (5) has a first part (9) of a means of locking in position on the rotary cam (6) and wherein this latter is provided with several contours (9'), each associated with a hooking point (6') and each constituting a stable position determined by the functional unit (2), and, thus, a position determined by the rotation of the rotary cam (6), wherein a second part co-operates functionally with the locking means, and wherein the two mutually complementary parts (9, 9'), for example male and female, or recessed and protruding, of the locking means co-operate functionally in order to lock the rotary position of the cam (6) with the drive rod (5) in the stand-by position.

20. Device according to claim 19, **characterised in that** the first part (9) of the locking means consists of a recess formed on or in the drive rod (5) and wherein the contours (9') of the rotary cam (6) constitute respectively the second part of the said locking means each consisting of a tab designed to fit into the abovementioned recess, at the end of the movement of the drive rod (5) before its arrival in a stand-by position.

21. Device according to claim 19, **characterised in that** the first part (9) of the locking means (9, 9') consists of a tab or finger formed on the drive rod (5) and wherein the contours (9') of the rotary cam (6) consist of depressions or indentations made on the periphery of the latter, wherein said tab or said finger (9) fits into the said depressions or indentations (9') at the end of the movement of the drive rod (5) before its arrival in the stand-by position.

22. Device according to claim 19, **characterised in that** the first part (9) of the locking means corresponds to the hooking means (5') in the form of a finger or lug on the drive rod (5) and wherein the contours (9') of the rotary cam (6) provided with a slot (15) consist of laterally cranked portions of the said slot forming receptive sites with interlinking of the finger or lug (5'), wherein the latter fits into one of these portions (9') at the end of the movement of the drive rod (5) before its arrival in the stand-by position.

23. Device according to any one of claims 20 to 22, **characterised in that** the mutual co-operation of the first and second parts (9 and 9') of the locking means in the stand-by position of the drive rod (5), and, thus, the rotational locking of the cam (6) and of the unit (2), is maintained by means of the action of the potential energy storage means (7).

24. Device according to any one of claims 1 to 23, **characterised in that** the functional unit (2) consists of a functional unit of a two-position valve (3), for example, an on-off valve of the low leak or zero leak type in the closed position.

25. Device according to claim 24, **characterised in that** the functional unit (2) consists of a portion of pipe (2') mounted to pivot in the valve body (3'), advantageously straight and whose section corresponds preferably to the sections of the openings or inlet pipe segments (10) and of outlet pipe segments (10') of the valve body (3') through which the fluid to be controlled passes, wherein said portion of pipe (2") is provided laterally with a sealing valve (11), and wherein said portion of pipe (2') is able and is designed to be swung by pivoting rotationally, controlled by the second part (6) of the transmission mechanism in the form of a rotary cam, between two stable positions, that is, a first position in which the portion of pipe (2') connects contiguously with the openings or segments of inlet pipe (10) and of outlet pipe (10') and a second position, for example offset by 90° from the first position, in which the sealing valve (11) is applied closely over the inlet or outlet opening in such a way that it closes the latter tightly.

26. Device according to claim 25, **characterised in that** the sealing valve (11) is provided with means (12) of support and/or of compression, without being in contact or providing a sliding contact with the valve body (3'), in particular with the internal face of the cylindrical peripheral wall of the latter, wherein these means (12) retract or move aside when the functional unit (2) of the valve (3) is in the closed and/or open position(s), in such a way that, in the closed position, they provide a tight seal under pressure of the inlet or outlet opening concerned, for example protruding contours (12) which fit into complementary depressions (12') located in the wall of the valve body (3'), when the functional unit (2) is in the sealing or opening position.

27. Device according to any one of claims 25 and 26, **characterised in that** the sealing valve (11) consists of a base plate (11') connected, if necessary opposite means (12), by means of a pivot link (11") to the portion of pipe (2'), and is spring loaded remotely away from the latter by a spring means (11'''), wherein said base plate (11') is faced or over-moulded with a sealing material (16).

28. Device according to any one of claims 1 to 27, **characterised in that** at least certain of the stable positions of the functional unit (2) correspond to a locked state of the co-operating means (9" and 9'''), defining a hard stop where they meet, for example a protruding shape (9") of the rotationally mounted second or other part (6) and corresponding protruding contours (9''') of the casing or body (3') of the regulation/control means (3).

29. Valve module with at least two positions, in particular an on/off valve, comprising a valve body (3') and a functional unit (2), **characterised in that** the functional unit (2) of the valve (3) is controlled by a device (1) according to any one of claims 1 to 27, incorporating said module.

30. Liquid or gaseous fluid circulation circuit, **characterised in that** it comprises at least one valve module (3) according to claim 29.
